(19) Europäisches Patentamt
European Patent Office
Office européen des brevets

(11) EP 0 975 219 B1

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(21) Anmeldenummer: **98922647.7**

(22) Anmeldetag: **06.04.1998**

(51) Int Cl.$^7$: **A01N 43/653**

(86) Internationale Anmeldenummer:
**PCT/EP98/01986**

(87) Internationale Veröffentlichungsnummer:
**WO 98/47367 (29.10.1998 Gazette 1998/43)**

# (54) FUNGIZIDE WIRKSTOFFKOMBINATIONEN

FUNGICIDE ACTIVE SUBSTANCE COMBINATIONS

COMBINAISONS DE SUBSTANCES ACTIVES FONGICIDES

(84) Benannte Vertragsstaaten:
**AT BE CH DE DK ES FI FR GB GR IE IT LI NL PT SE**
Benannte Erstreckungsstaaten:
**RO SI**

(30) Priorität: **18.04.1997 DE 19716257**

(43) Veröffentlichungstag der Anmeldung:
**02.02.2000 Patentblatt 2000/05**

(73) Patentinhaber: **BAYER AG**
**51368 Leverkusen (DE)**

(72) Erfinder:
- **DUTZMANN, Stefan**
  **D-40764 Langenfeld (DE)**
- **STENZEL, Klaus**
  **D-40595 Düsseldorf (DE)**
- **JAUTELAT, Manfred**
  **D-51399 Burscheid (DE)**

(56) Entgegenhaltungen:
**WO-A-96/16048**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 975 219 B1

Printed by Jouve, 75001 PARIS (FR)

## Beschreibung

Die vorliegende Erfindung betrifft neue Wirkstoffkombinationen, die aus dem bekannten 2-[2-(1-Chlorcyclopropyl)-3-(2-chlorphenyl)-2-hydroxypropyl]-2,4-dihydro-[1,2,4]-triazol-3-thion einerseits und weiteren bekannten fungiziden Wirkstoffen andererseits bestehen und sehr gut zur Bekämpfung von phytopathogenen Pilzen geeignet sind.

Es ist bereits bekannt, daß 2-[2-(1-Chlorcyclopropyl)-3-(2-chlorphenyl)-2-hydroxypropyl]-2,4-dihydro-[1,2,4]-triazol-3-thion fungizide Eigenschaften besitzt (vergl. WO 96-16 048). Die Wirksamkeit dieses Stoffes ist gut, läßt aber bei niedrigen Aufwandmengen in manchen Fällen zu wünschen übrig.

Ferner ist schon bekannt, daß zahlreiche Triazol-Derivate, Anilin-Derivate, Dicarboximide und andere Heterocyclen zur Bekämpfung von Pilzen eingesetzt werden können (vergl. EP-A 0 040 345, DE-A 2 201 063, DE-A 2 324 010, Pesticide Manual, 9th. Edition (1991), Seiten 249 und 827, US-A 3 903 090 und EP-A 0 206 999). Auch die Wirkung dieser Stoffe ist bei niedrigen Aufwandmengen nicht immer befriedigend.

Schließlich ist auch bekannt, daß 1-[(6-Chlor-3-pyridinyl)-methyl]-N-nitro-2-imidazolidinimin zur Bekämpfung tierischer Schädlinge, wie Insekten, verwendbar ist (vergl. Pesticide Manual, 9th Edition (1991), Seite 491). Fungizide Eigenschaften dieses Stoffes wurden aber bisher noch nicht beschrieben.

Es wurde nun gefunden, daß die neuen Wirkstoffkombinationen aus
2-[2-(1-Chlorcyclopropyl)-3-(2-chlorphenyl)-2-hydroxypropyl]-2,4-dihydro-[1,2,4]-triazol-3-thion der Formel

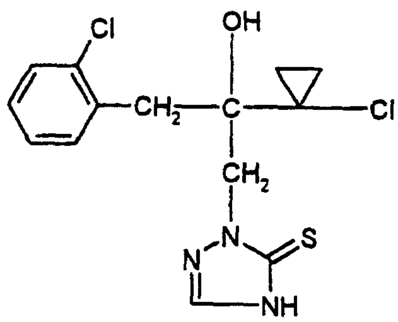

(I)

und

(1) einem Triazol-Derivat der Formel

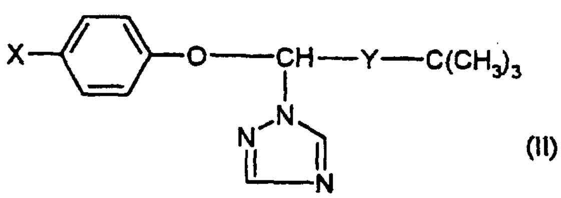

(II) ,

in welcher

X für Chlor oder Phenyl steht
und

Y für

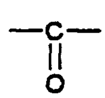

oder

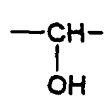

steht,

und/oder

(2) dem Triazol-Derivat der Formel

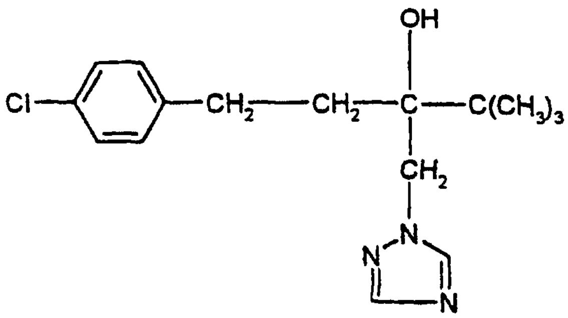

(III)

(Tebuconazol)

und/oder

(3) einem Anilin-Derivat der Formel

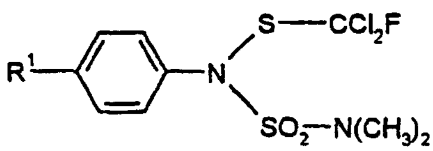

(IV)

in welcher

$R^1$ für Wasserstoff oder Methyl steht,

und/oder

(4) N-[1-(4-Chlor-phenyl)-ethyl]-2,2-dichlor-1-ethyl-3-methyl-cyclopropan-carbonsäureamid der Formel

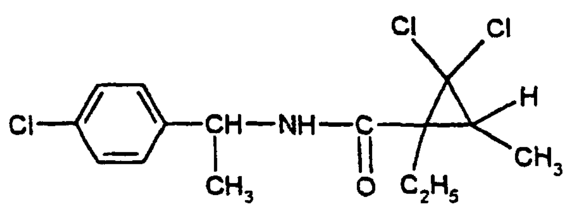

(V)

und/oder

(5) dem Zink-propylen-1,2-bis-(dithiocarbamidat) der Formel

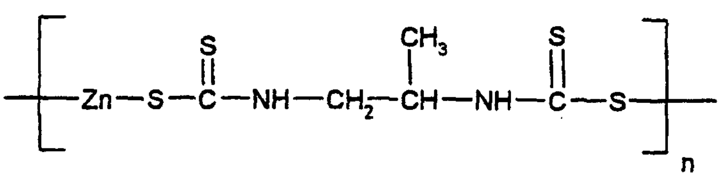

(VI)

$n >= 1$ (Propineb)

und/oder

(6) mindestens einem Thiocarbamat der Formel

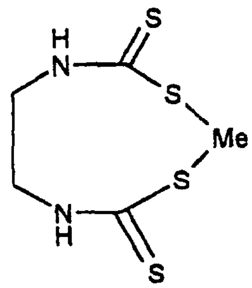

(VII)

Me = Zn oder Mn

oder Gemisch aus Zn und Mn

und/oder

(7) dem Anilin-Derivat der Formel

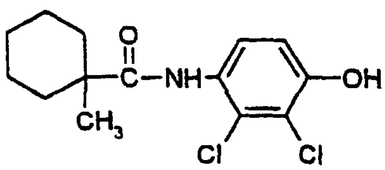

(VIII)

(Fenhexamid)

und/oder

(8) der Verbindung der Formel

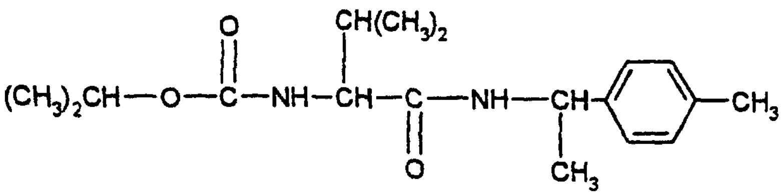

(IX)

und/oder

(9) dem Benzothiadiazol-Derivat der Formel

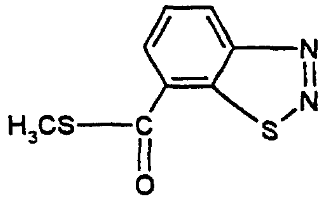

(X)

(Bendicar)

und/oder

(10) dem 8-t-Butyl-2-(N-ethyl-N-n-propyl-amino)-methyl-1,4-dioxaspiro[5,4]-decan der Formel

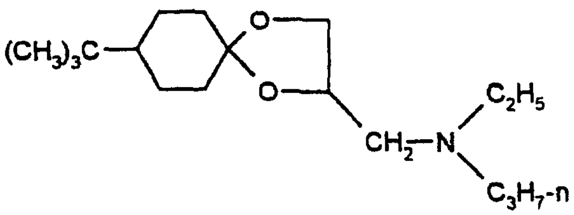

(XI)

(Spiroxamin)

und/oder

(11) der Verbindung der Formel

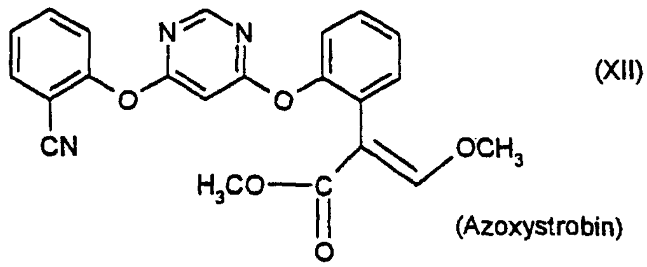

(XII)

(Azoxystrobin)

und/oder

(12) der Verbindung der Formel

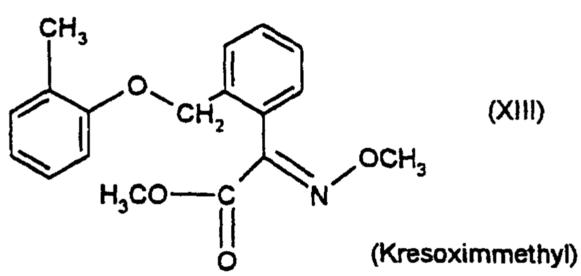

(XIII)

(Kresoximmethyl)

und/oder

(13) der Verbindung der Formel

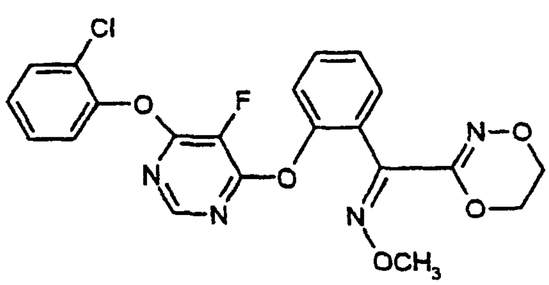

(XIV)

und/oder

(14) dem Dicarboximid der Formel

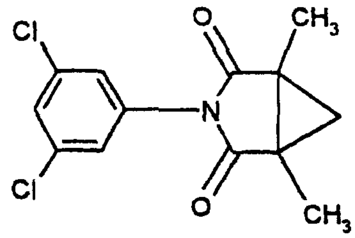

(XV)

(Procymidone)

und/oder

(15) einem Pyrimidin-Derivat der Formel

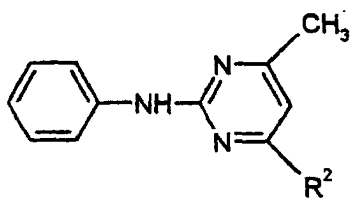

(XVI)

in welcher

$R^2$ für Methyl oder Cyclopropyl steht,

und/oder

(16) dem Phenyl-Derivat der Formel

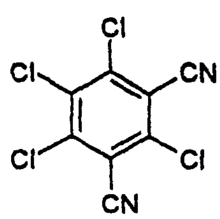

(XVII)

(Chlorothalonil)

und/oder

(17) dem Morpholin-Derivat der Formel

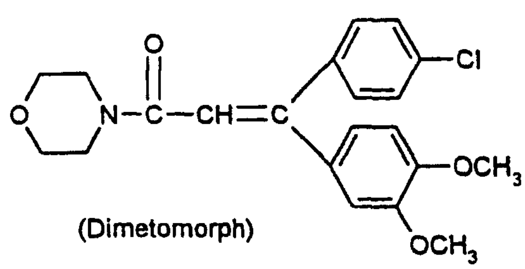

(XVIII)

(Dimetomorph)

und/oder

(18) dem Phthalimid-Derivat der Formel

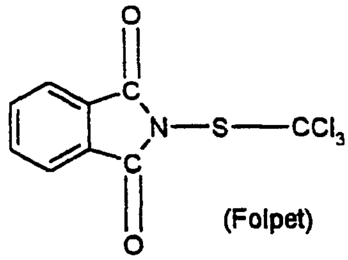

(XIX)

(Folpet)

und/oder

(19) der Phosphor-Verbindung der Formel

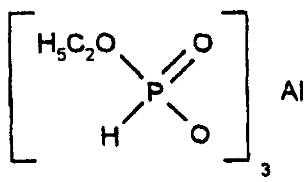

(XX)

(Fosetyl-Al)

und/oder

(20) einem Phenylpyrrol-Derivat der Formel

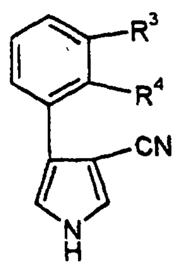

(XXI)

in welcher

$R^3$ und $R^4$ eweils für Chlor stehen oder gemeinsam für einen Rest der Formel $-O-CF_2-O-$ stehen,

und/oder

(21) dem 1-[(6-Chlor-3 -pyridinyl)-methyl]-N-nitro-2-imidazolidinimin der Formel

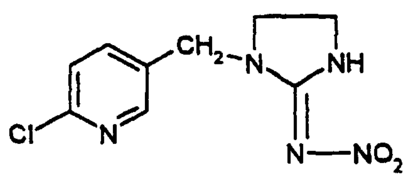

(XXII)

(Imidacloprid)

und/oder

(22) dem Phenylharnstoff-Derivat der Formel

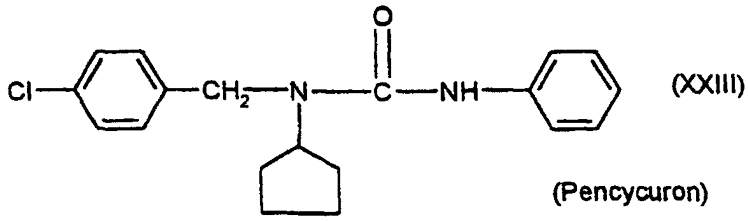

(XXIII)

(Pencycuron)

und/oder

(23) dem Benzamid-Derivat der Formel

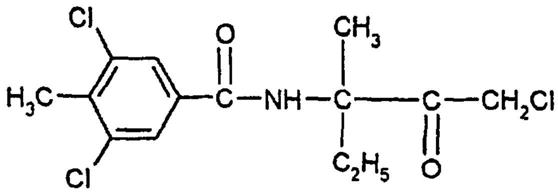

(XXIV)

und/oder

(24) einem Guanidin-Derivat der Formel

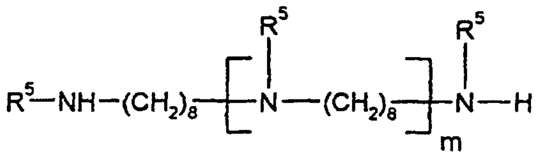

(XXV)

$$x\ (2 + m)\ CH_3COOH$$

in welcher

m für ganze Zahlen von 0 bis 5 steht und

$R^5$ für Wasserstoff (17 bis 23 %) oder den Rest der Formel

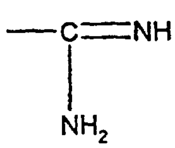

(77 bis 83 %)

steht,

wobei in den Wirkstoffkombinationen das Gewichtsverhältnis von Wirkstoff der Formel (I) zu

- Wirkstoff der Gruppe (1) zwischen 1:0,1 und 1:20 liegt,
- Wirkstoff der Gruppe (2) zwischen 1:0,1 und 1:20 liegt,
- Wirkstoff der Gruppe (3) zwischen 1:0,2 und 1:150 liegt,

- Wirkstoff der Gruppe (4) zwischen 1:0,1 und 1:10 liegt,
- Wirkstoff der Gruppe (5) zwischen 1:1 und 1:50 liegt,
- Wirkstoff der Gruppe (6) zwischen 1:1 und 1:50 liegt,
- Wirkstoff der Gruppe (7) zwischen 1:0,1 und 1:50 liegt,
- Wirkstoff der Gruppe (8) zwischen 1:0,2 und 1:50 liegt,
- Wirkstoff der Gruppe (9) zwischen 1:0,02 und 1:50 liegt,
- Wirkstoff der Gruppe (10) zwischen 1:0,1 und 1:50 liegt,
- Wirkstoff der Gruppe (11) zwischen 1:0,1 und 1:50 liegt,
- Wirkstoff der Gruppe (12) zwischen 1:0,1 und 1:50 liegt,
- Wirkstoff der Gruppe (13) zwischen 1:0,1 und 1:50 liegt,
- Wirkstoff der Gruppe (14) zwischen 1:0,1 und 1:50 liegt,
- Wirkstoff der Gruppe (15) zwischen 1:0,1 und 1:50 liegt,
- Wirkstoff der Gruppe (16) zwischen 1:1 und 1:50 liegt,
- Wirkstoff der Gruppe (17) zwischen 1:1 und 1:20 liegt,
- Wirkstoff der Gruppe (18) zwischen 1:1 und 1:50 liegt,
- Wirkstoff der Gruppe (19) zwischen 1:1 und 1:50 liegt,
- Wirkstoff der Gruppe (20) zwischen 1:0,1 und 1:10 liegt,
- Wirkstoff der Gruppe (21) zwischen 1:0,05 und 1:20 liegt,
- Wirkstoff der Gruppe (22) zwischen 1:0,1 und 1:10 liegt,
- Wirkstoff der Gruppe (23) zwischen 1:0,1 und 1:10 liegt und
- Wirkstoff der Gruppe (24) zwischen 1:0,1 und 1:10 liegt,

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Das 2-[2-(1-Chlorcyclopropyl)-3-(2-chlorphenyl)-2-hydroxypropyl]-2,4-dihydro-[1,2,4]-triazol-3-thion der Formel (I) ist bekannt (vergl. WO 96-16 048). Die Verbindung kann in der "Thiono"-Form der Formel

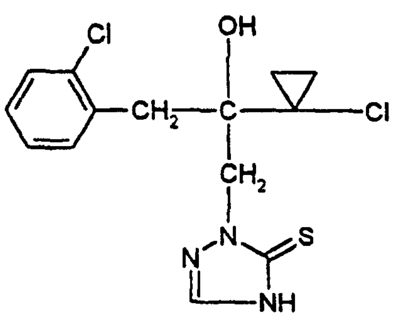

(I)

oder in der tautomeren "Mercapto"-Form der Formel

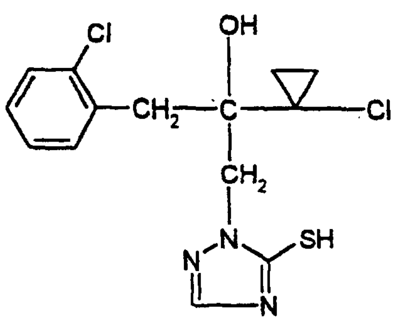

(Ia)

vorliegen. Der Einfachheit halber wird jeweils nur die "Thiono"-Form aufgeführt.

Die Formel (II) umfaßt die Verbindungen

1-(4-Chlor-phenoxy)-3,3-dimethyl-1-(1,2,4-triazol-1-yl)-butan-2-on der Formel

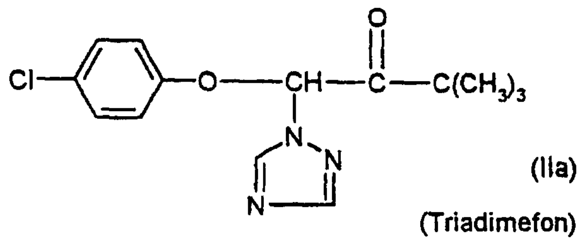

(IIa)

(Triadimefon)

1-(4-Chlor-phenoxy)-3,3-dimethyl-1-(1,2,4-triazol-1-yl)-butan-2-ol der Formel

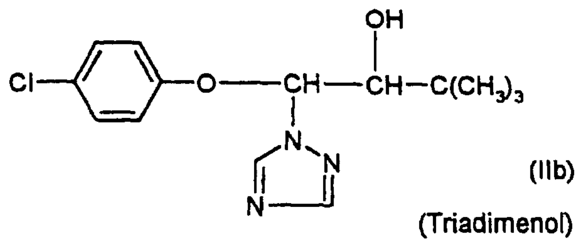

(IIb)

(Triadimenol)

und
1-(4-Phenyl-phenoxy)-3,3-dimethyl-1-(1,2,4-triazol-1-yl)-butan-2-ol der Formel

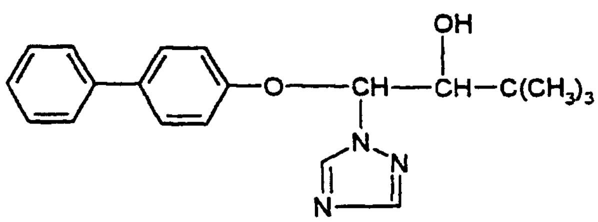

(IIc)

(Bitertanol)

Die Formel (IV) umfaßt die Anilin-Derivate der Formeln

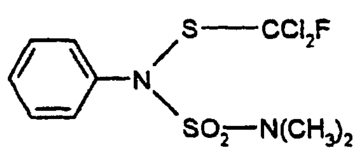

(IVa)

(Dichlofluanid)

und

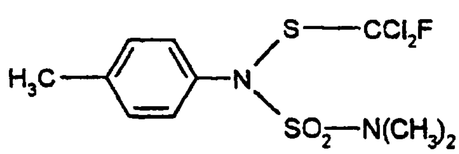

(IVb)

(Tolylfluanid)

Aus der Strukturformel für den Wirkstoff der Formel (V) ist ersichtlich, daß die Verbindung drei asymmetrisch substituierte Kohlenstoffatome aufweist. Das Produkt kann daher als Gemisch von verschiedenen Isomeren oder auch in Form einer einzigen Komponente vorliegen. Besonders bevorzugt sind die Verbindungen
N-(R)-[1-(4-Chlor-phenyl)-ethyl]-(1S)-2,2-dichlor-1-ethyl-3t-methyl-1r-cyclopropancarbonsäureamid der Formel

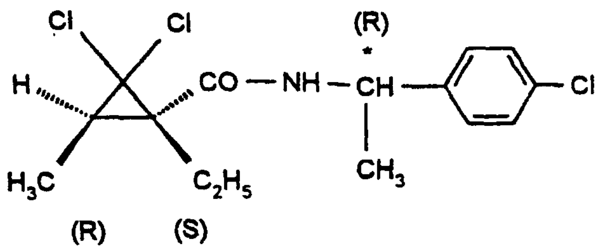

(Va)

und
N-(R)-[1-(4-Chlor-phenyl)-ethyl]-(1R)-2,2-dichlor-1-ethyl-3t-methyl-1r-cyclopropancarbonsäureamid der Formel

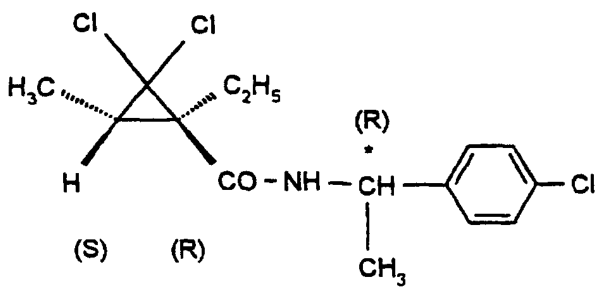

(Vb)

Die Formel (VII) umfaßt die Verbindungen

(VIIa) Me = Zn (Zineb)

(VIIb) Me = Mn (Maneb)

und

(VIIc) Mischung aus (VIIa) und (VIIb) (Mancozeb)

Die Formel (XVI) umfaßt die Verbindungen

(XVIa) $R^2 = CH_3$ (Pyrimethanil)

und

**(XVIb)** **$R^2$ =** 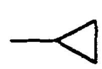 **(Cyprodinyl)**

Die Formel (XXI) umfaßt die Verbindungen
4-(2,3-Dichlorphenyl)-pyrrol-3-carbonitril der Formel

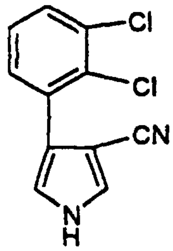

(XXIa)

(Fenpiclonil)

und
4-(2,2-Difluor-1,3-benzodioxol-7-yl)-1H-pyrrol-3-carbonitril der Formel

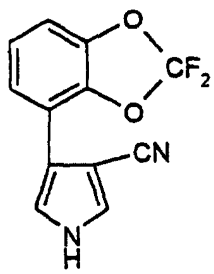

(XXIb)

(Fludioxonil)

Bei dem Guanidin-Derivat der Formel (XXV) handelt es sich um ein Substanzgemisch mit dem Common Name Guazatine.

Die in den erfindungsgemäßen Wirkstoffkombinationen neben dem Wirkstoff der Formel (I) vorhandenen Komponenten sind ebenfalls bekannt. Im einzelnen werden die Wirkstoffe in den folgenden Publikationen beschrieben:

(1) Verbindungen der Formel (II)
DE-A 2 201 063
DE-A2324010

(2) Verbindung der Formel (III)
EP-A 0 040 345

(3) Verbindungen der Formel (IV)
Pesticide Manual, 9th. Ed. (1991), Seiten 249 und 827

(4) Verbindung der Formel (V) und deren einzelne Isomere
EP-A 0 341 475

(5) Verbindung der Formel (VI)
Pesticide Manual, 9th. Ed. (1991), Seite 726

(6) Verbindungen der Formel (VII)
Pesticide Manual, 9th. Ed. (1991), Seiten 529, 531 und 866

(7) Verbindung der Formel (VIII)
EP-A 0 339 418

(8) Verbindung der Formel (IX)
EP-A 0 472 996

(9) Verbindung der Formel (X)
EP-A 0 313 512

(10) Verbindung der Formel (XI)

EP-A 0 281 842

(11) Verbindung der Formel (XII)
EP-A 0 382 375

(12) Verbindung der Formel (XIII)
EP-A 0 515 901

(13) Verbindung der Formel (XIV)
EP-A 196 02 095

(14) Verbindung der Formel (XV)
US-A 3 903 090

(15) Verbindungen der Formel (XVI)
EP-A 0 270 111
EP-A 0 310 550

(16) Verbindung der Formel (XVII)
Pesticide Manual, 9th. Ed. (1991), Seite 159

(17) Verbindung der Formel (XVIII)
EP-A 0 219 756

(18) Verbindung der Formel (XIX)
Pesticide Manual, 9th. Ed. (1991), Seite 431

(19) Verbindung der Formel (XX)
Pesticide Manual, 9th. Ed. (1991), Seite 443

(20) Verbindungen der Formel (XXI)
EP-A 0 236 272
EP-A 0 206 999

(21) Verbindung der Formel (XXII)
Pesticide Manual, 9th. Ed. (1991), Seite 491

(22) Verbindung der Formel (XRIII)
DE-A 2 732 257

(23) Verbindung der Formel (XXIV)
EP-A 0 600 629

(24) Substanz der Formel (XXV)
Pesticide Manual, 9th. Ed. (1991), Seite 461

Die erfindungsgemäßen Wirkstoffkombinationen enthalten neben dem Wirkstoff der Formel (I) mindestens einen Wirkstoff von den Verbindungen der Gruppen (1) bis (24). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Auf 1 Gewichtsteil an Wirkstoff der Formel (I) entfallen

vorzugsweise 0,2 bis 10 Gewichtsteile an Wirkstoff aus der Gruppe (1),

vorzugsweise 0,2 bis 10 Gewichtsteile an Wirkstoff aus der Gruppe (2),

vorzugsweise 1 bis 100 Gewichtsteile an Wirkstoff aus der Gruppe (3),

vorzugsweise 0,2 bis 5 Gewichtsteile an Wirkstoff aus der Gruppe (4),

vorzugweise 5 bis 20 Gewichtsteile an Wirkstoff aus der Gruppe (5),

vorzugsweise 2 bis 20 Gewichtsteile an Wirkstoff aus der Gruppe (6),

vorzugsweise 1 bis 30 Gewichtsteile an Wirkstoff aus der Gruppe (7),

vorzugsweise 1 bis 20 Gewichtsteile an Wirkstoff aus der Gruppe (8),

vorzugsweise 0,2 bis 10 Gewichtsteile an Wirkstoff aus der Gruppe (9),

vorzugsweise 0,2 bis 20 Gewichtsteile an Wirkstoff aus der Gruppe (10),

vorzugsweise 0,2 bis 20 Gewichtsteile an Wirkstoff aus der Gruppe (11),

vorzugsweise 0,2 bis 20 Gewichtsteile an Wirkstoff aus der Gruppe (12),

vorzugweise 0,2 bis 20 Gewichtsteile an Wirkstoff aus der Gruppe (13),

vorzugsweise 1 bis 30 Gewichtsteile an Wirkstoff aus der Gruppe (14),

vorzugsweise 0,2 bis 20 Gewichtsteile an Wirkstoff aus der Gruppe (15),

vorzugsweise 2 bis 20 Gewichtsteile an Wirkstoff aus der Gruppe (16),

vorzugsweise 2 bis 10 Gewichtsteile an Wirkstoff aus der Gruppe (17),

vorzugsweise 2 bis 20 Gewichtsteile an Wirkstoff aus der Gruppe (18),

vorzugsweise 2 bis 20 Gewichtsteile an Wirkstoff aus der Gruppe (19),

vorzugsweise 0,2 bis 5 Gewichtsteile an Wirkstoff aus der Gruppe (20),

vorzugweise 0,1 bis 10 Gewichtsteile an Wirkstoff aus der Gruppe (21),

vorzugsweise 0,2 bis 5 Gewichtsteile an Wirkstoff aus der Gruppe (22),

vorzugsweise 0,2 bis 5 Gewichtsteile an Wirkstoff aus der Gruppe (23), und/oder

vorzugsweise 0,2 bis 5 Gewichtsteile an Wirkstoff aus der Gruppe (24).

Die erfindungsgemäßen Wirkstoffkombinationen besitzen sehr gute füngizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Puccinia und Fusarium, sowie zur Bekämpfung von Krankheiten im Weinbau, wie Uncinula, Plasmopara und Botrytis, und außerdem in dikotylen Kulturen zur Bekämpfung von Echten und Falschen Mehltaupilzen sowie Blattfleckenerregern.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in

polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B, natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungiziden, Insektiziden, Akariziden und Herbiziden, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die füngizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,
Y den Wirkungsgrad beim Einsatz des Wirkstoffes B in einer Aufwandmenge von n g/ha bedeutet und
E den Wirkungsgrad beim Einsatz der Wirkstoffe A und B in Aufwandmengen von m und n g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, daß kein Befall beobachtet wird.

Ist die tatsächliche füngizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angefiihrten Formel errechnete Wert für den erwarteten Wirkungsgrad (E).

Die Erfindung wird durch die folgenden Beispiele veranschaulicht.

**Beispiel 1**

Sphaerotheca-Test (Gurke) / protektiv

| | |
|---|---|
| Lösungsmittel | 47 Gewichtsteile Aceton |
| Emulgator | 3 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von Sphaerotheca fuliginea inokuliert. Die Pflanzen werden dann bei ca. 23°C und einer relativen Luftfeuchtigkeit von ca. 70 % im Gewächshaus aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 1**

Sphaerotheca-Test (Gurke) / protektiv

| Wirkstoff | Aufwandmenge an Wirkstoff in g/ha | Wirkungsgrad in % |
|---|---|---|
| Bekannt:<br>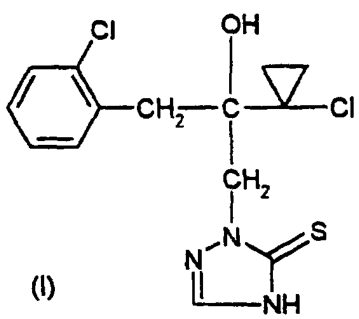<br>(I) | 2,5<br>0,5 | 21<br>0 |
| 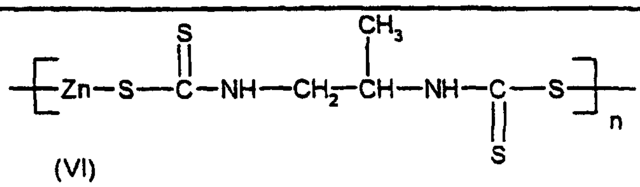<br>(VI) | 25 | 0 |
| 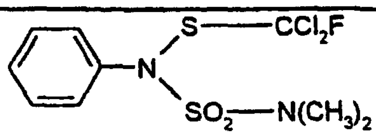<br>(IVa) | 25 | 0 |
| 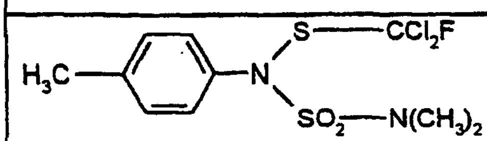<br>(IVb) | 25 | 0 |
| 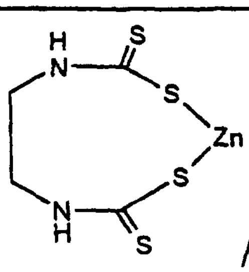 / 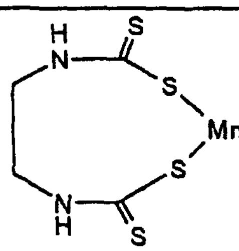 (VIIc) | 25 | 0 |

**Tabelle 1** (Fortsetzung)

Sphaerotheca-Test (Gurke) / protektiv

| Wirkstoff | Aufwandmenge an Wirkstoff in g/ha | Wirkungsgrad in % |
|---|---|---|
| 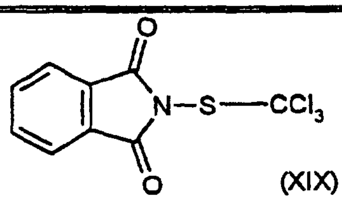 (XIX) | 25 | 0 |
| 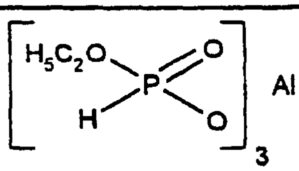 (XX) | 50 | 0 |
| 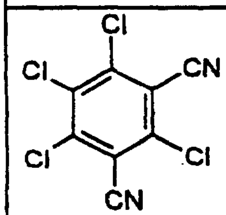 (XVII) | 25 | 0 |
| 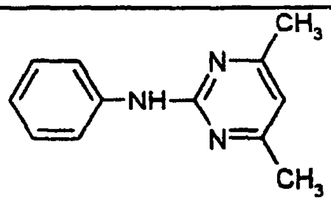 (XVIa) | 25 | 0 |
| 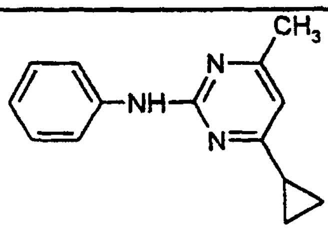 (XVIb) | 25 | 0 |
| 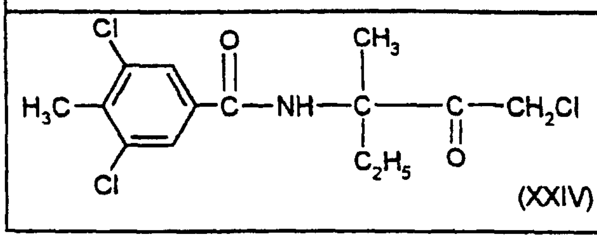 (XXIV) | 12,5 | 0 |

**Tabelle 1** (Fortsetzung)

Sphaerotheca-Test (Gurke) / protektiv

| Wirkstoff | Aufwandmenge an Wirkstoff in g/ha | Wirkungsgrad in % |
|---|---|---|
| 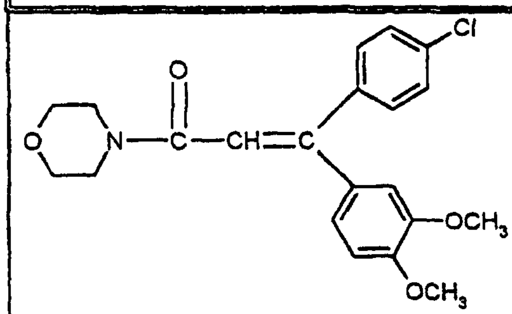 (XVIII) | 12,5 | 0 |
| 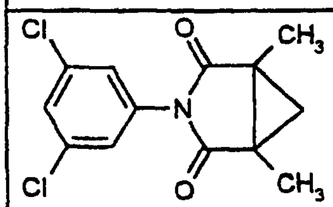 (XV) | 12,5 | 0 |
| 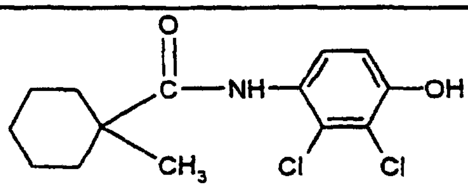 (VIII) | 12,5 | 0 |
| 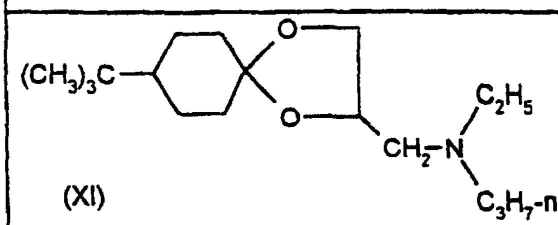 (XI) | 12,5 | 0 |
| 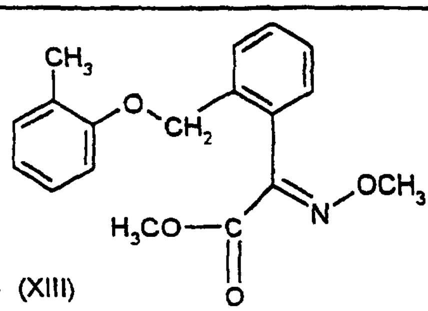 (XIII) | 2,5 | 57 |

**Tabelle 1** (Fortsetzung)

Sphaerotheca-Test (Gurke) / protektiv

| Wirkstoff | Aufwandmenge an Wirkstoff in g/ha | Wirkungsgrad in % |
|---|---|---|
| 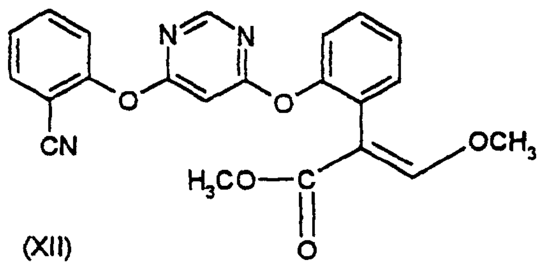 (XII) | 2,5 | 59 |
| 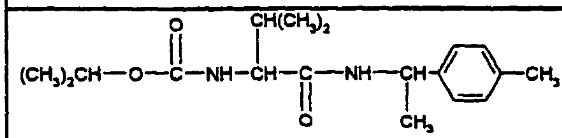 (IX) | 12,5 | 13 |
| 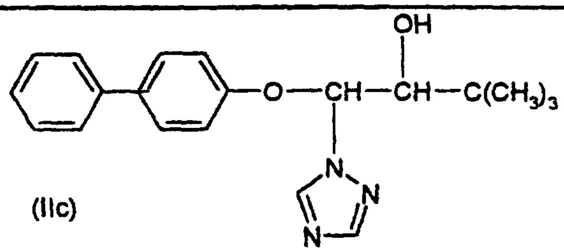 (IIc) | 2,5 | 0 |
| 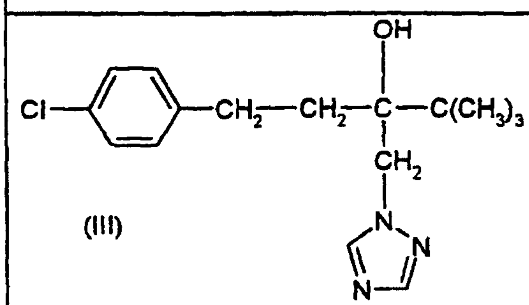 (III) | 2,5 | 50 |
| 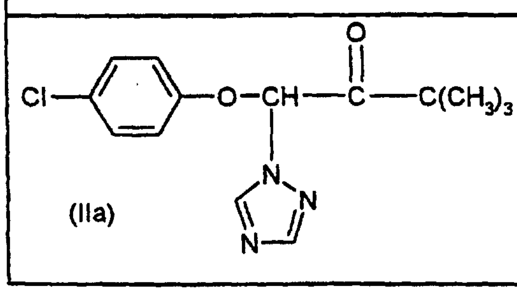 (IIa) | 2,5 | 37 |

**Tabelle 1** (Fortsetzung)

Sphaerotheca-Test (Gurke) / protektiv

| Wirkstoff | Aufwandmenge an Wirkstoff in g/ha | Wirkungsgrad in % | |
|---|---|---|---|
| 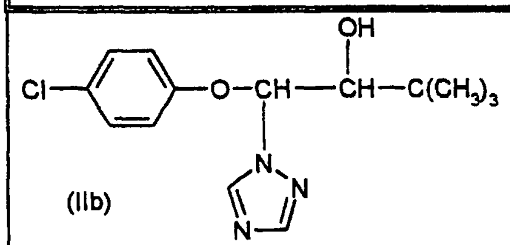 (IIb) | 2,5 | 80 | |
| 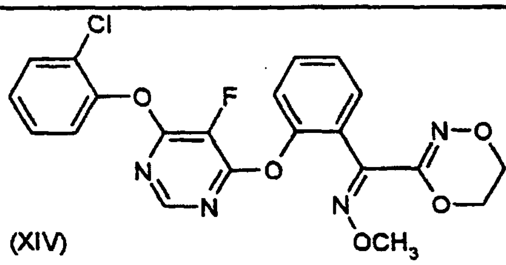 (XIV) | 2,5 | 22 | |
| 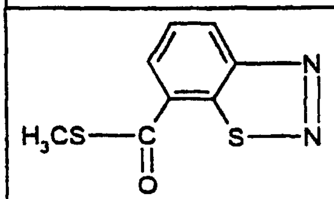 (X) | 2,5 | 0 | |
| Erfindungsgemäß: | | gef. | ber.*) |
| (I) + (VI) (1:10) | 2,5 + 25 | 70 | 21 |
| (I) + (IVa) (1:10) | 2,5 + 25 | 63 | 21 |

**Tabelle 1** (Fortsetzung)

Sphaerotheca-Test (Gurke) / protektiv

| Wirkstoff | Aufwandmenge an Wirkstoff in g/ha | Wirkungsgrad in % | |
|---|---|---|---|
| | | gef. | ber.*) |
| (I) + (IVb) (1:10) | 2,5 + 25 | 63 | 21 |
| (I) + (VIIc) (1:10) | 2,5 + 25 | 63 | 21 |
| (I) + (XIX) (1:10) | 2,5 + 25 | 59 | 21 |
| (I) + (XX) (1:20) | 2,5 + 50 | 52 | 21 |
| (I) + (XVII) (1:10) | 2,5 + 25 | 63 | 21 |

**Tabelle 1** (Fortsetzung)

Sphaerotheca-Test (Gurke) / protektiv

| Wirkstoff | Aufwandmenge an Wirkstoff in g/ha | Wirkungsgrad in % | |
|---|---|---|---|
| | | gef. | ber.*) |
| (I) + (XVIa) (1:10) | 2,5 + 25 | 59 | 21 |
| (I) + (XVIb) (1:10) | 2,5 + 25 | 52 | 21 |
| (I) + (XXIV) (1:5) | 2,5 + 12,5 | 50 | 21 |
| (I) + (XVIII) (1:5) | 2,5 + 12,5 | 63 | 21 |
| (I) + (XV) (1:5) | 2,5 + 12,5 | 50 | 21 |
| (I) + (VIII) (1:5) | 2,5 + 12,5 | 75 | 21 |

**Tabelle 1** (Fortsetzung)

Sphaerotheca-Test (Gurke) / protektiv

| Wirkstoff | Aufwandmenge an Wirkstoff in g/ha | Wirkungsgrad in % | |
|---|---|---|---|
| | | gef. | ber.*) |
| (I) + (XI) (1:5) | 2,5 + 12,5 | 54 | 21 |
| (I) + (XIII) (1:5) | 0,5 + 2,5 | 80 | 57 |
| (I) + (XII) (1:5) | 0,5 + 2,5 | 75 | 59 |
| (I) + (IX) (1:5) | 2,5 + 12,5 | 66 | 31 |
| (I) + (IIc) (1:1) | 2,5 + 2,5 | 90 | 21 |
| (I) + (III) (1:1) | 2,5 + 2,5 | 85 | 61 |

**Tabelle 1** (Fortsetzung)

Sphaerotheca-Test (Gurke) / protektiv

| Wirkstoff | Aufwandmenge an Wirkstoff in g/ha | Wirkungsgrad in % | |
|---|---|---|---|
| | | gef. | ber.*) |
| (I) + (IIa) (1:1) | 2,5 + 2,5 | 90 | 50 |
| (I) + (IIb) (1:1) | 2,5 + 2,5 | 93 | 84 |
| (I) + (XIV) (1:1) | 2,5 + 2,5 | 70 | 38 |
| (I) + (X) (1:1) | 2,5 + 2,5 | 52 | 21 |

gef. = gefundener Wirkungsgrad

ber. = nach der Colby-Formel berechneter Wirkungsgrad

**Beispiel 2**

Venturia-Test (Apfel) / protektiv

| | |
|---|---|
| Lösungsmittel | 47 Gewichtsteile Aceton |

(fortgesetzt)

| | |
|---|---|
| Emulgator | 3 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Konidiensuspension des Apfelschorferregers Venturia inaequalis inokuliert und verbleiben dann 1 Tag bei ca. 20°C und 100 % relativer Luftfeuchtigkeit in einer Inkubationskabine.

Die Pflanzen werden dann im Gewächshaus bei ca. 21°C und einer relativen Luftfeuchtigkeit von ca. 90 % aufgestellt.

12 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 2**

Venturia-Test (Apfel) / protektiv

| Wirkstoff | Aufwandmenge an Wirkstoff in g/ha | Wirkungsgrad in % |
|---|---|---|
| Bekannt:<br>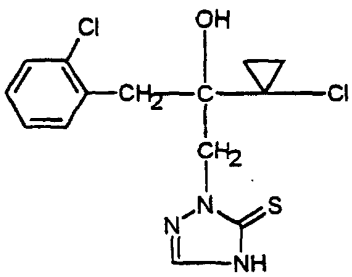 (I) | 1 | 1 |
| 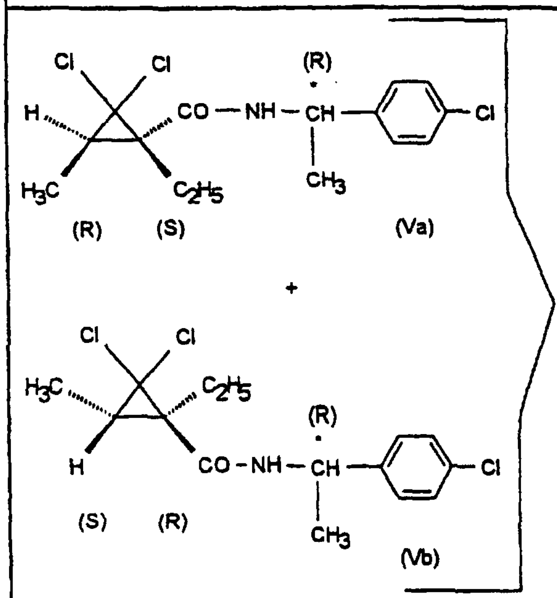<br>(1:1-Gemisch) | 1 | 0 |
| Erfindungsgemäß:<br>(I) + (Va/Vb) (1:1) | 1 + 1 | gef. 54 / ber.*) 1 |

gef. = gefundener Wirkungsgrad

ber. = nach der Colby-Formel berechneter Wirkungsgrad

**Beispiel 3**

Erysiphe-Test (Gerste) / kurativ

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung in der angegebenen Aufwandmenge besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 3**

Erysiphe-Test (Gerste) / kurativ

| Wirkstoff | Aufwandmenge an Wirkstoff in g/ha | Wirkungsgrad in % |
|---|---|---|
| Bekannt: 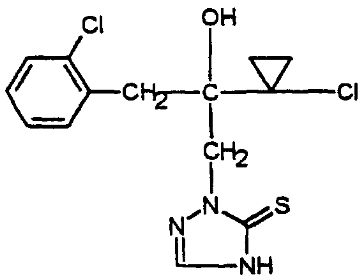 (I) | 25 | 81 |
| 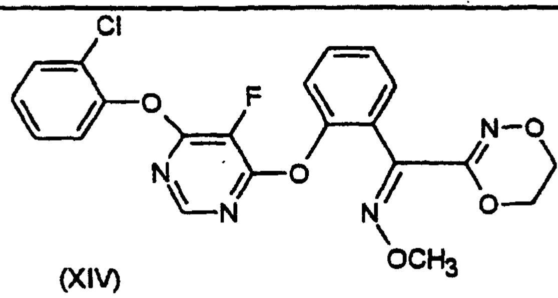 (XIV) | 25 | 75 |
| Erfindungsgemäß: (I) + (XIV) (1:3) | 6,25 + 18,75 | 100 |

**Beispiel 4**

Erysiphe-Test (Gerste) / protektiv

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser

auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

## Tabelle 4

Erysiphe-Test (Gerste) / protektiv

| Wirkstoff | Aufwandmenge an Wirkstoff in g/ha | Wirkungsgrad in % |
|---|---|---|
| Bekannt:<br>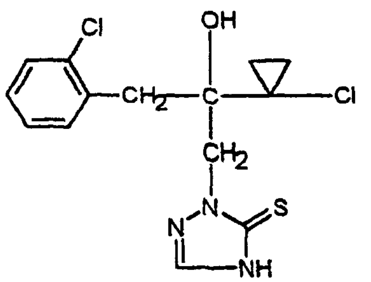 (I) | 25 | 83 |
| 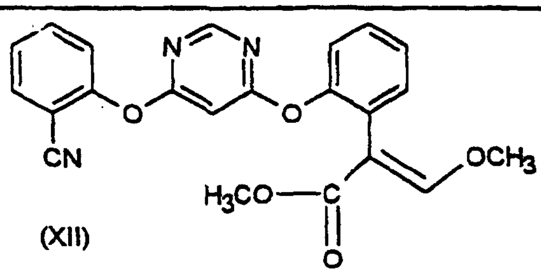 (XII) | 25 | 92 |
| Erfindungsgemäß:<br>(I) + (XII) (1:1) | 12,5 + 12,5 | 100 |
| (I) + (XII) (1:3) | 6,25 + 18,75 | 100 |
| (I) + (XII) (3:1) | 18,75 + 6,25 | 100 |

**Beispiel 5**

Erysiphe-Test (Weizen) / kurativ

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf kurative Wirksamkeit werden junge Pflanzen mit Sporen von Erysiphe graminis f.sp. tritici bestäubt. 48 Stunden nach der Inokulation werden die Pflanzen mit der Wirkstoffzubereitung in der angegebenen Aufwandmenge besprüht.

Die Pflanzen werden dann im Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 5**

Erysiphe-Test (Weizen) / kurativ

| Wirkstoff | Aufwandmenge an Wirkstoff in g/ha | Wirkungsgrad in % |
|---|---|---|
| Bekannt:<br>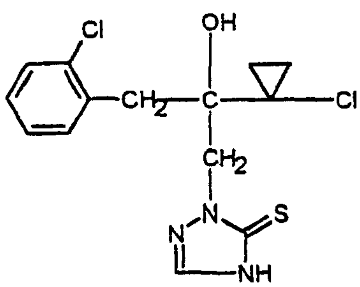 (I) | 25<br>12,5<br>6,25 | 75<br>50<br>25 |
| 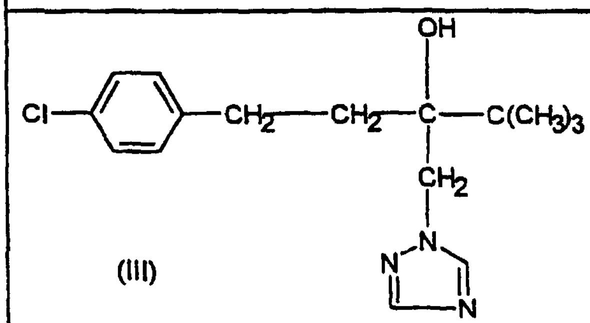 (III) | 25 | 88 |
| 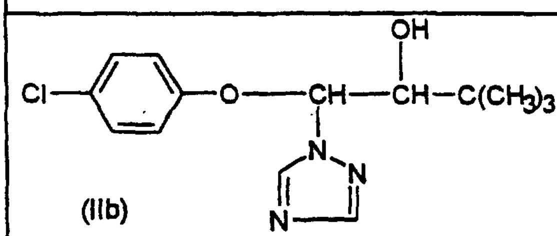 (IIb) | 25 | 81 |
| 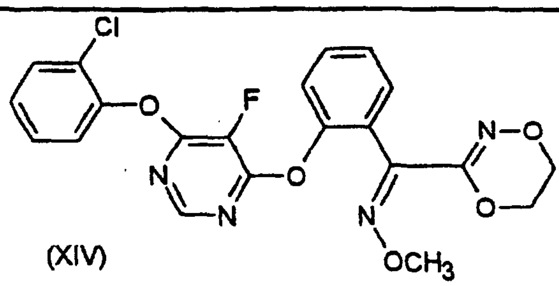 (XIV) | 12,5 | 0 |

**Tabelle 5** (Fortsetzung)

Erysiphe-Test (Weizen) / kurativ

| Wirkstoff | Aufwandmenge an Wirkstoff in g/ha | Wirkungsgrad in % |
|---|---|---|
| 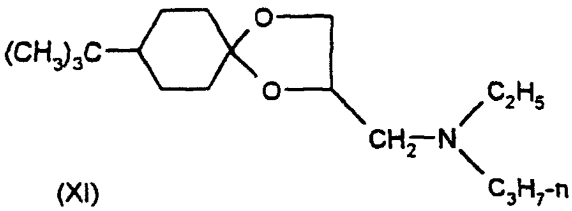 (XI) | 12,5 | 0 |
| 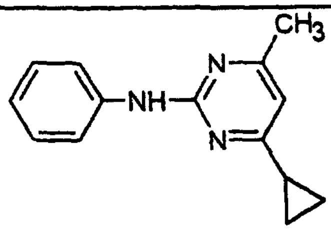 (XVIb) | 12,5 | 0 |
| 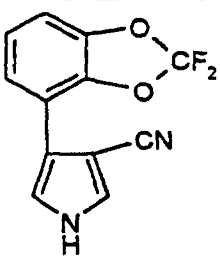 (XXIb) | 6,25 | 38 |
| 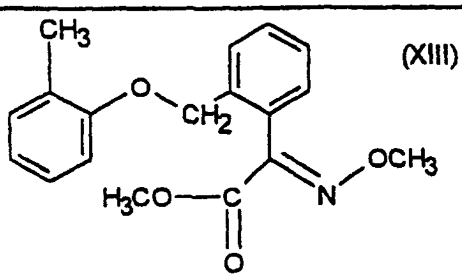 (XIII) | 6,25 | 94 |
| Erfindungsgemäß: (I) + (III) (1:1) | 12,5 + 12,5 | 100 |

**Tabelle 5** (Fortsetzung)

Erysiphe-Test (Weizen) / kurativ

| Wirkstoff | Aufwandmenge an Wirkstoff in g/ha | Wirkungsgrad in % |
|---|---|---|
| (I) + (III) (1:3) | 6,25 + 18,75 | 100 |
| (I) + (III) (3:1) | 18,75 + 6,25 | 100 |
| (I) + (IIb) (1:1) | 12,5 + 12,5 | 100 |
| (I) + (IIb) (1:3) | 6,25 + 18,75 | 100 |
| (I) + (XIV) (1:1) | 6,25 + 6,25 | 63 |
| (I) + (XIV) (3:1) | 9,375 + 3,125 | 75 |

**Tabelle 5** (Fortsetzung)

Erysiphe-Test (Weizen) / kurativ

| Wirkstoff | Aufwandmenge an Wirkstoff in g/ha | Wirkungsgrad in % |
|---|---|---|
| (I) + (XI) (1:1) | 6,25 + 6,25 | 100 |
| (I) + (XI) (1:3) | 3,125 + 9,375 | 100 |
| (I) + (XI) (3:1) | 9,375 + 3,125 | 100 |
| (I) + (XVIb) (1:1) | 6,25 + 6,25 | 75 |
| (I) + (XXIb) (1:3) | 1,5625 + 4,6875 | 50 |
| (I) + (XIII) (1:1) | 3,125 + 3,125 | 100 |

**Tabelle 5** (Fortsetzung)

Erysiphe-Test (Weizen) / kurativ

| Wirkstoff | Aufwandmenge an Wirkstoff in g/ha | Wirkungsgrad in % |
|---|---|---|
| (I) + (XIII) (1:3) | 1,5625 + 4,6875 | 100 |

**Beispiel 6**

Erysiphe-Test (Weizen) / protektiv

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit besprüht man junge Pflanzen mit der Wirkstoffzubereitung in der angegebenen Aufwandmenge. Nach Antrocknen des Spritzbelages werden die Pflanzen mit Sporen von Erysiphe graminis f.sp. tritici bestäubt.

Die Pflanzen werden dann im Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 6**

Erysiphe-Test (Weizen) / protektiv

| Wirkstoff | Aufwandmenge an Wirkstoff in g/ha | Wirkungsgrad in % |
|---|---|---|
| <u>Bekannt:</u><br>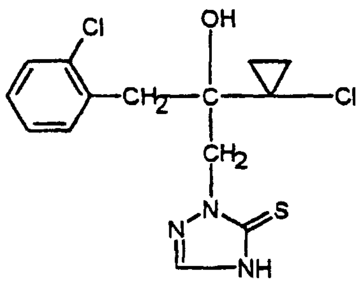 (I) | 6,25 | 57 |
| 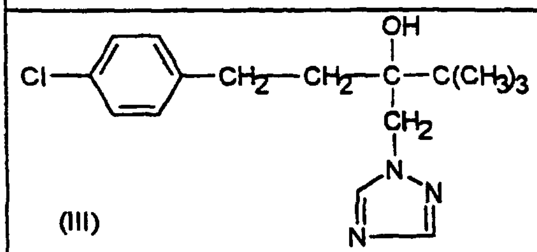<br>(III) | 6,25 | 57 |
| <u>Erfindungsgemäß:</u><br>(I) + (III)<br>(1:1) | 3,125 + 3,125 | 79 |
| (I) + (III)<br>(1:3) | 1,5625 + 4,6875 | 71 |
| (I) + (III)<br>(3:1) | 4,6875 + 1,5625 | 71 |

**Beispiel 7**

Leptosphaeria nodorum-Test (Weizen) / protektiv

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden dann im Gewächshaus bei einer Temperatur von ca. 15°C und einer relativen Luftfeuchtigkeit von ca. 80 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 7**

Leptosphaeria nodorum-Test (Weizen) / protektiv

| Wirkstoff | Aufwandmenge an Wirkstoff in g/ha | Wirkungsgrad in % |
|---|---|---|
| <u>Bekannt:</u><br>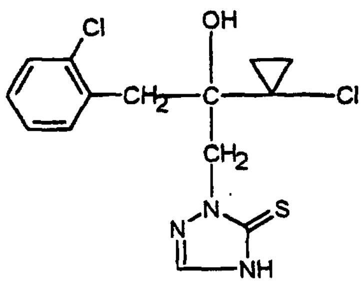<br>(I) | 25 | 62 |
| 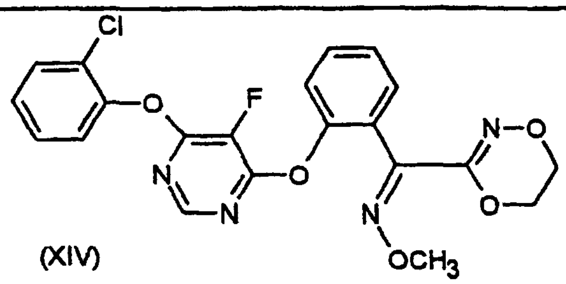<br>(XIV) | 25 | 87 |
| <u>Erfindungsgemäß:</u><br>(I) + (XIV)<br>(1:3) | 6,25 + 18,75 | 100 |

**Beispiel 8**

Puccinia-Test (Weizen) / protektiv

| | |
|---|---|
| Lösungsmittel | 10 Gewichtsteile N-Methyl-pyrrolidon |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit einer Sporensuspension von Puccinia recondita in einer 0,1 %igen wäßrigen Agarlösung inokuliert. Nach Antrocknen des Spritzbelages werden die Pflanzen mit der Wirkstoffzubereitung in der angegebenen Allfwandmenge besprüht.

Die Pflanzen verbleiben 24 Stunden bei 20°C und 100 % relativer Luftfeuchtigkeit in einer Inkubationskabine.

Die Pflanzen werden dann in einem Gewächshaus bei einer Temperatur von ca. 20°C und einer relativen Luftfeuchtigkeit von ca. 80 % aufgestellt, um die Entwicklung von Rostpusteln zu begünstigen.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 8**

Puccinia-Test (Weizen) / protektiv

| Wirkstoff | Aufwandmenge an Wirkstoff in g/ha | Wirkungsgrad in % |
|---|---|---|
| **Bekannt:** 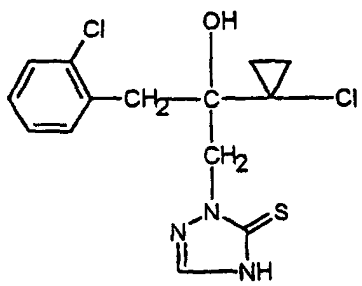 (I) | 25 | 38 |
| 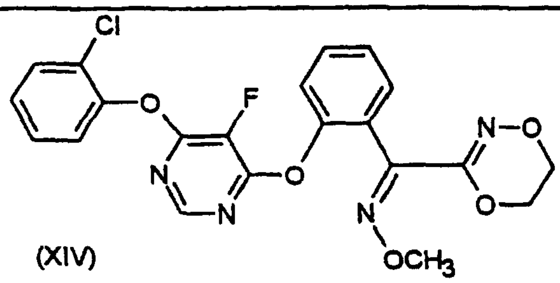 (XIV) | 25 | 94 |
| **Erfindungsgemäß:** (I) + (XIV) (1:3) | 6,25 + 18,75 | 100 |
| (I) + (XIV) (3:1) | 18,75 + 6,25 | 100 |

**Beispiel 9**

Fusarium culmorum-Test (Weizen) / Saatgutbehandlung

Die Anwendung der Wirkstoffe erfolgt als Trockenbeizmittel. Sie werden zubereitet durch Abstrecken des

jeweiligen Wirkstoffes oder der Wirkstoffkombination mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn im Gewächshaus bei einer Temperatur von ca. 18°C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

## Tabelle 9

### Fusarium culmorum-Test (Weizen) / Saatgutbehandlung

| Wirkstoff | Aufwandmenge an Wirkstoff in g/ha | Wirkungsgrad in % |
|---|---|---|
| Bekannt:<br>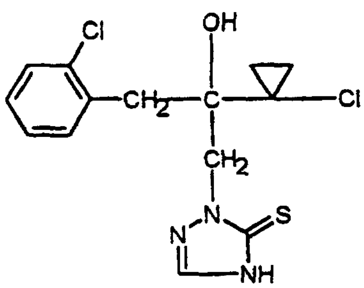 (I) | 75 | 32 |
| 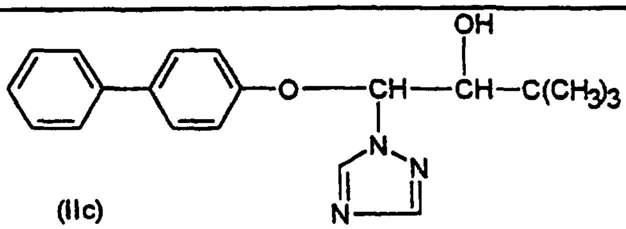 (IIc) | 75 | 27 |
| Erfindungsgemäß:<br>(I) + (IIc) (1:1) | 37,5 + 37,5 | 41 |

**Beispiel 10**

Fusarium nivale-Test (Triticale) / Saatgutbehandlung

Die Anwendung der Wirkstoffe erfolgt als Trockenbeizmittel. Sie werden zubereitet durch Abstrecken des jeweiligen Wirkstoffes oder der Wirkstoffkombination mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Kom 1 cm tief in eine Standarderde und kultiviert ihn im Gewächshaus bei einer Temperatur von ca. 10°C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 10**

Fusarium nivale-Test (Triticale) / Saatgutbehandlung

| Wirkstoff | Aufwandmenge an Wirkstoff in g/ha | Wirkungsgrad in % |
|---|---|---|
| Bekannt: 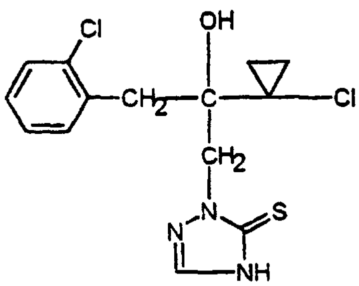 (I) | 75<br>25 | 14<br>0 |
| 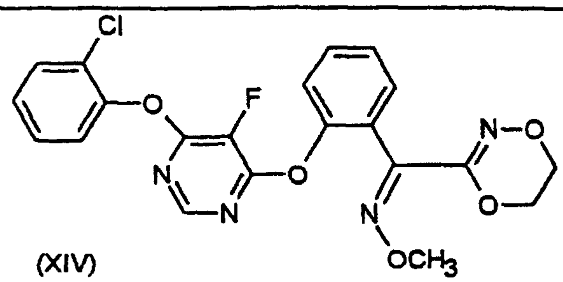 (XIV) | 75 | 94 |
| 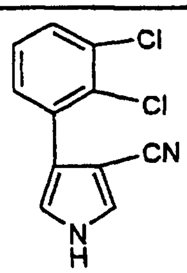 (XXIa) | 25 | 0 |
| Erfindungsgemäß: (I) + (XIV) (1:1) | 37,5 + 37,5 | 99 |
| (I) + (XXIa) (1:1) | 12,5 + 12,5 | 31 |

**Beispiel 11**

Rhizoctonia solani-Test (Baumwolle) / Saatgutbehandlung

Die Anwendung der Wirkstoffe erfolgt als Trockenbeizmittel. Sie werden zubereitet durch Abstrecken des jeweiligen Wirkstoffes oder der Wirkstoffkombination mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut sät man mit 2 x 50 Korn 2 cm tief in eine mit Rhizoctonia solani infizierte Einheitserde und kultiviert es im Gewächshaus bei einer Temperatur von ca. 22°C in Saatkästen, die täglich 15 Stunden dem Licht ausgesetzt werden.

Nach 8 Tagen erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 11**

Rhizoctonia solani-Test (Baumwolle) / Saatgutbehandlung

| Wirkstoff | Aufwandmenge an Wirkstoff in g/ha | Wirkungsgrad in % |
|---|---|---|
| Bekannt:<br>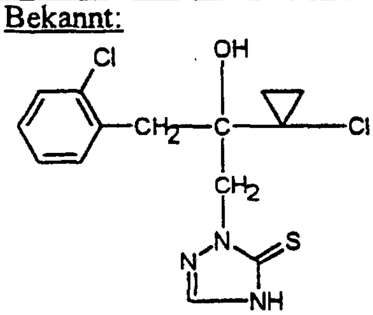 (I) | 25 | 19 |
| 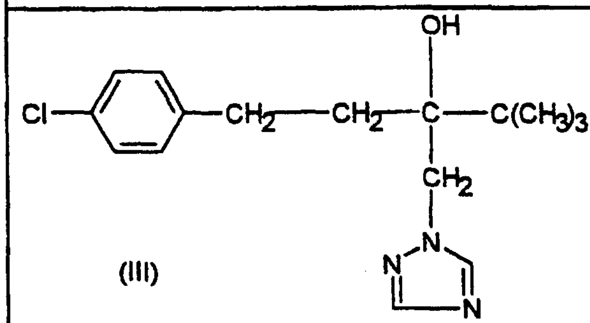<br>(III) | 25 | 27 |
| 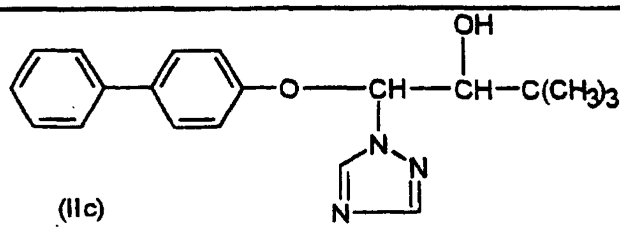<br>(IIc) | 25 | 0 |
| Erfindungsgemäß:<br>(I) + (III)<br>(1:1) | 12,5 + 12,5 | 40 |
| (I) + (IIc)<br>(1:1) | 12,5 + 12,5 | 31 |

**Patentansprüche**

1. Fungizide Mittel, **gekennzeichnet durch** einen Gehalt an einer Wirkstoffkombination, bestehend aus 2-[2-(1-Chlorcyclopropyl)-3-(2-chlorphenyl)-2-hydroxypropyl]-2,4-dihydro-[1,2,4]-triazol-3-thion der Formel

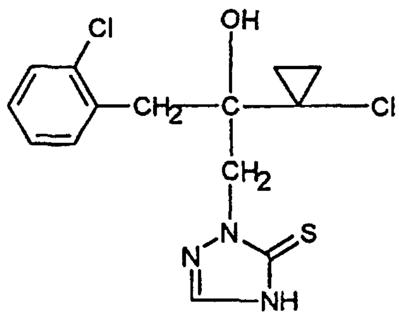

(I)

und

(1) einem Triazol-Derivat der Formel

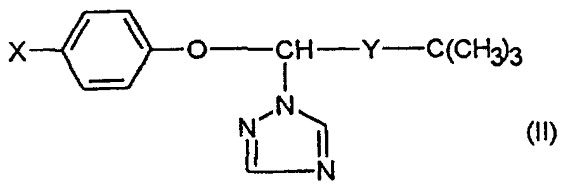

(II) ,

in welcher

X für Chlor oder Phenyl steht und

Y für

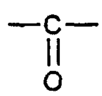

oder

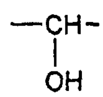

steht,

und/oder

(2) dem Triazol-Derivat der Formel

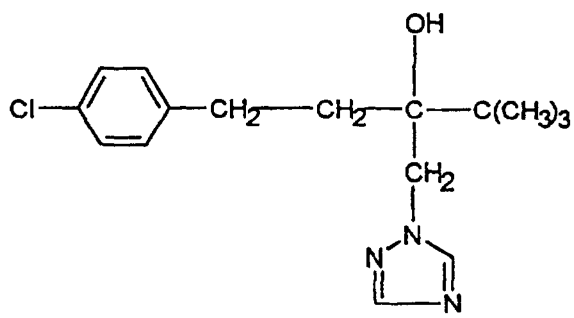

(III)

(Tebuconazol)

und/oder

(3) einem Anilin-Derivat der Formel

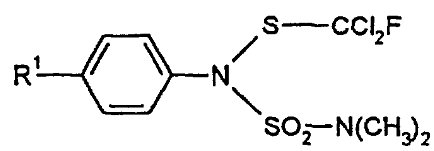

(IV)

in welcher

$R^1$ für Wasserstoff oder Methyl steht,

und/oder

(4) N-[1-(4-Chlor-phenyl)-ethyl]-2,2-dichlor-1-ethyl-3-methyl-cyclopropan-carbonsäureamid der Formel

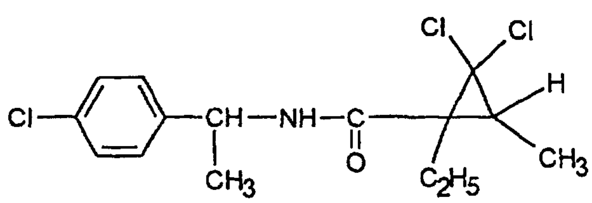

(V)

und/oder

(5) dem Zink-propylen-1,2-bis-(dithiocarbamidat) der Formel

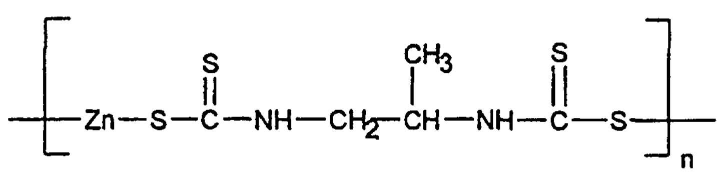

(VI)

n > = 1 (Propineb)

und/oder

(6) mindestens einem Thiocarbamat der Formel

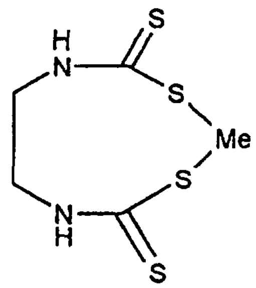

(VII)

Me = Zn oder Mn

oder Gemisch aus Zn und Mn

und/oder

(7) dem Anilin-Derivat der Formel

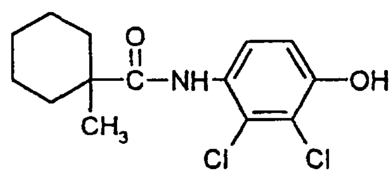

(VIII)

(Fenhexamid)

und/oder

(8) der Verbindung der Formel

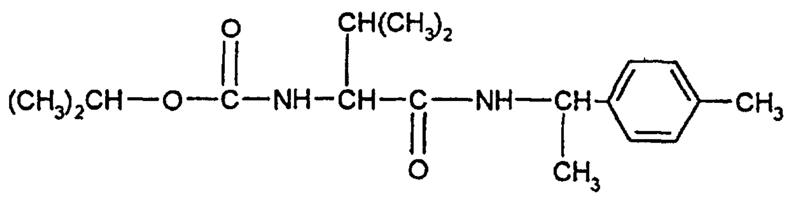

(IX)

und/oder

(9) dem Benzothiadiazol-Derivat der Formel

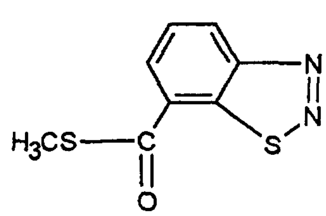

(X)

(Bendicar)

und/oder

(10) dem 8-t-Butyl-2-(N-ethyl-N-n-propyl-amino)-methyl-1,4-dioxaspiro-[5,4]-decan der Formel

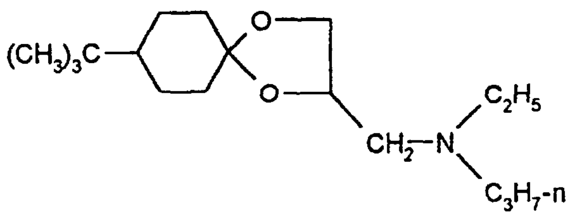

(XI)

(Spiroxamin)

und/oder

(11) der Verbindung der Formel

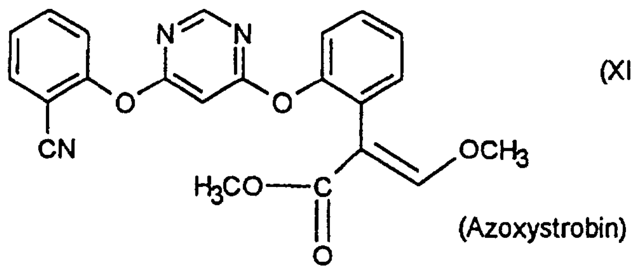

(XII)

(Azoxystrobin)

und/oder

(12) der Verbindung der Formel

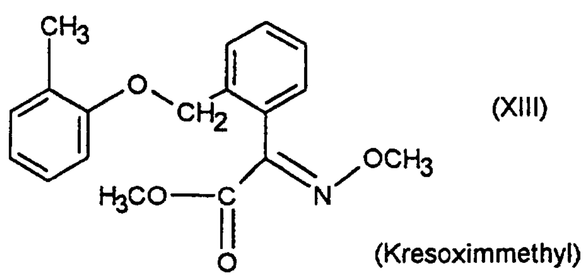

(XIII)

(Kresoximmethyl)

und/oder

(13) der Verbindung der Formel

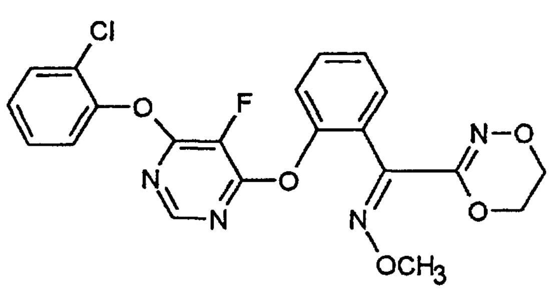

(XIV)

und/oder

(14) dem Dicarboximid der Formel

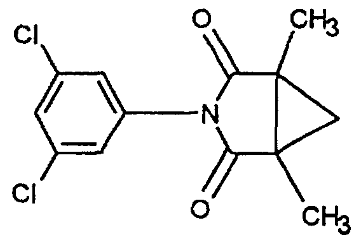

(XV)

(Procymidone)

und/oder

(15) einem Pyrimidin-Derivat der Formel

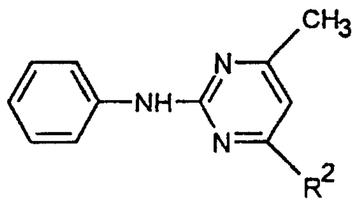

(XVI)

in welcher

$R^2$ für Methyl oder Cyclopropyl steht,

und/oder

(16) dem Phenyl-Derivat der Formel

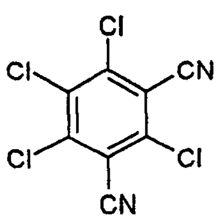

(XVII)

(Chlorothalonil)

und/oder

(17) dem Morpholin-Derivat der Formel

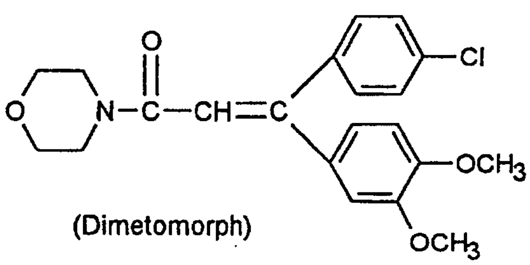

(XVIII)

(Dimetomorph)

und/oder

(18) dem Phthalimid-Derivat der Formel

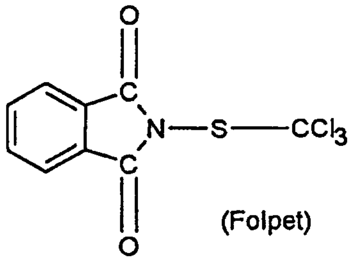

(XIX)

(Folpet)

und/oder

(19) der Phosphor-Verbindung der Formel

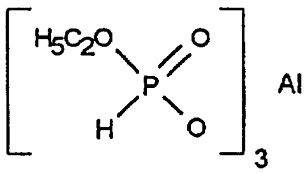

(XX)

(Fosetyl-Al)

und/oder

(20) einem Phenylpyrrol-Derivat der Formel

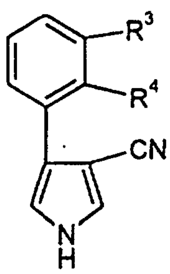

(XXI)

in welcher

$R^3$ und $R^4$ jeweils für Chlor stehen oder gemeinsam für einen Rest der Formel $-O-CF_2-O-$ stehen,

und/oder

(21) dem 1-[(6-Chlor-3-pyridinyl)-methyl]-N-nitro-2-imidazolidinimin der Formel

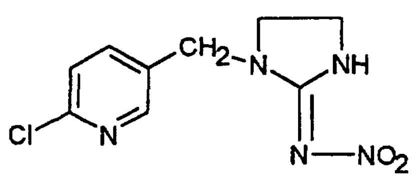

(XXII)

(Imidacloprid)

und/oder

(22) dem Phenylharnstoff-Derivat der Formel

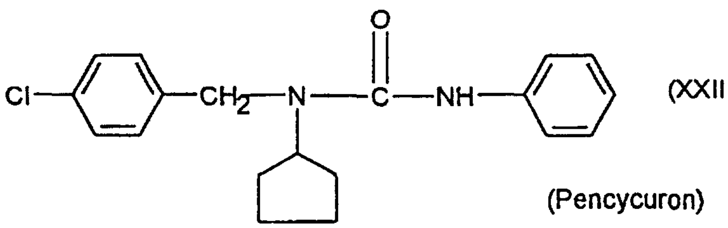

(XXIII)

(Pencycuron)

und/oder

(23) dem Benzamid-Derivat der Formel

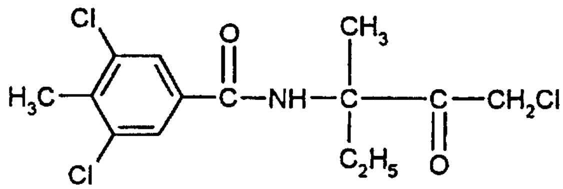

(XXIV)

und/oder

(24) einem Guanidin-Derivat der Formel

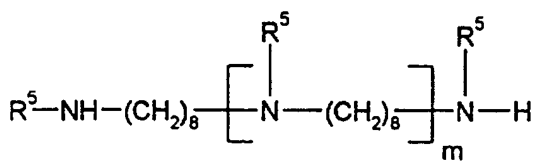

(XXV)

$$x\ (2 + m)\ CH_3COOH$$

in welcher

m fiir ganze Zahlen von 0 bis 5 steht und

$R^5$ für Wasserstoff (17 bis 23 %) oder den Rest der Formel

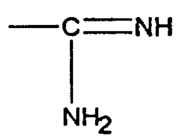

(77 bis 83 %)

steht, wobei in den Wirkstoffkombinationen das Gewichtsverhältnis von Wirkstoff der Formel (I) zu

- Wirkstoff der Gruppe (1) zwischen 1:0,1 und 1:20 liegt,
- Wirkstoff der Gruppe (2) zwischen 1:0,1 und 1:20 liegt,

- Wirkstoff der Gruppe (3) zwischen 1:0,2 und 1:150 liegt,
- Wirkstoff der Gruppe (4) zwischen 1:0,1 und 1:10 liegt,
- Wirkstoff der Gruppe (5) zwischen 1:1 und 1:50 liegt,
- Wirkstoff der Gruppe (6) zwischen 1:1 und 1:50 liegt,
- Wirkstoff der Gruppe (7) zwischen 1:0,1 und 1:50 liegt,
- Wirkstoff der Gruppe (8) zwischen 1:0,2 und 1:50 liegt,
- Wirkstoff der Gruppe (9) zwischen 1:0,02 und 1:50 liegt,
- Wirkstoff der Gruppe (10) zwischen 1:0,1 und 1:50 liegt,
- Wirkstoff der Gruppe (11) zwischen 1:0,1 und 1:50 liegt,
- Wirkstoff der Gruppe (12) zwischen 1:0,1 und 1:50 liegt,
- Wirkstoff der Gruppe (13) zwischen 1:0,1 und 1:50 liegt,
- Wirkstoff der Gruppe (14) zwischen 1:0,1 und 1:50 liegt,
- Wirkstoff der Gruppe (15) zwischen 1:0,1 und 1:50 liegt,
- Wirkstoff der Gruppe (16) zwischen 1:1 und 1:50 liegt,
- Wirkstoff der Gruppe (17) zwischen 1:1 und 1:20 liegt,
- Wirkstoff der Gruppe (18) zwischen 1:1 und 1:50 liegt,
- Wirkstoff der Gruppe (19) zwischen 1:1 und 1:50 liegt,
- Wirkstoff der Gruppe (20) zwischen 1:0,1 und 1:10 liegt,
- Wirkstoff der Gruppe (21) zwischen 1:0,05 und 1:20 liegt,
- Wirkstoff der Gruppe (22) zwischen 1:0,1 und 1:10 liegt,
- Wirkstoff der Gruppe (23) zwischen 1:0,1 und 1:10 liegt und
- Wirkstoff der Gruppe (24) zwischen 1:0,1 und 1:10 liegt.

**2.** Verfahren zur Bekämpfung von Pilzen, **dadurch gekennzeichnet, daß** man Wirkstoffkombinationen gemäß Anspruch 1 auf die Pilze und/oder deren Lebensraum ausbringt.

**3.** Verwendung von Wirkstoffkombinationen gemäß Anspruch 1 zur Bekämpfung von Pilzen.

**4.** Verfahren zur Herstellung von fungiziden Mitteln, **dadurch gekennzeichnet, daß** man Wirkstoffkombinationen gemäß Anspruch 1 mit Streckmitteln und/oder oberflächenaktiven Stoffen vermischt.

## Claims

**1.** Fungicidal compositions, **characterized in that** they contain an active compound combination consisting of 2-[2-(1-chlorocyclopropyl)-3-(2-chlorophenyl)-2-hydroxypropyl]-2,4-dihydro-[1,2,4]-triazole-3-thione of the formula

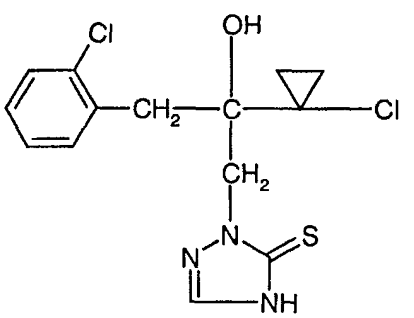

(I)

and

(1) a triazole derivative of the formula

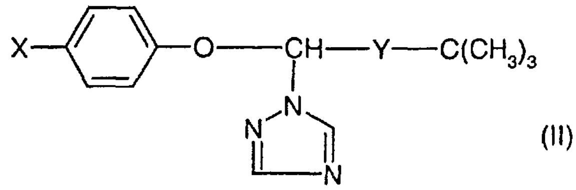

(II) ,

in which

X represents chlorine or phenyl
and

Y represents

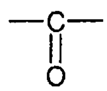

or

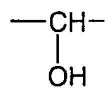

,

and/or

(2) the triazole derivative of the formula

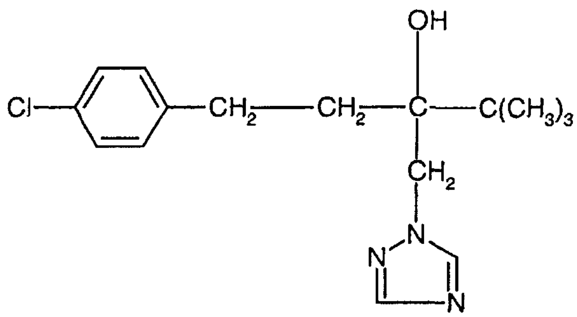

(III)

(tebuconazole)

and/or

(3) an aniline derivative of the formula

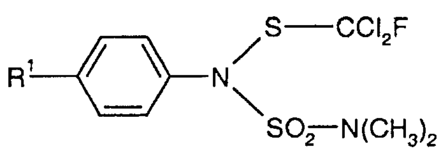

(IV)

in which

$R^1$ represents hydrogen or methyl,

and/or

(4) N-[1-(4-chloro-phenyl)-ethyl]-2,2-dichloro-1-ethyl-3-methylcyclopropane-carboxamide of the formula

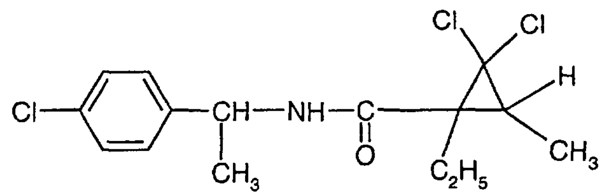 (V)

and/or

(5) the zinc propylene-1,2-bis-(dithiocarbamidate) of the formula

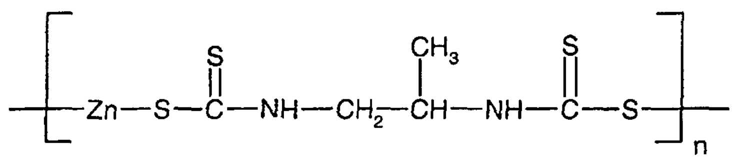 (VI)

n > = 1 (propineb)

and/or

(6) at least one thiocarbamate of the formula

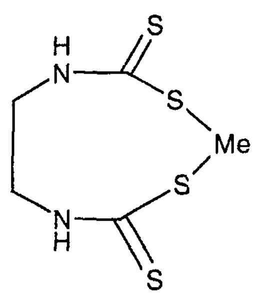 (VII)

Me = Zn or Mn

or a mixture of Zn and Mn

and/or

(7) the aniline derivative of the formula

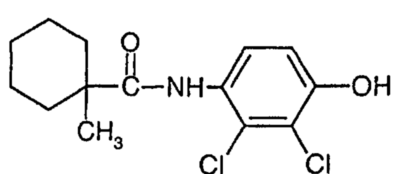 (VIII)

(fenhexamide)

and/or

(8) the compound of the formula

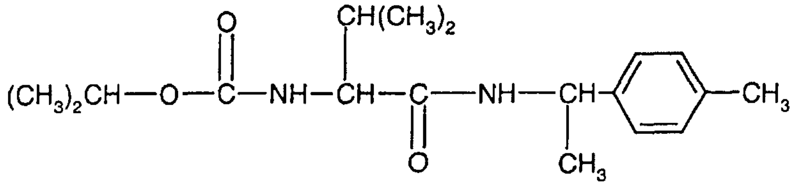

(IX)

and/or

(9) the benzothiadiazole derivative of the formula

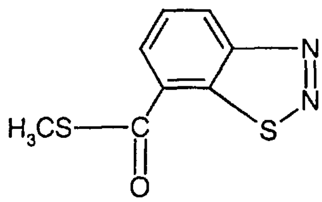

(X)

(bendicar)

and/or

(10) the 8-t-butyl-2-(N-ethyl-N-n-propyl-amino)-methyl-1,4-dioxaspiro-[5,4]-decane of the formula

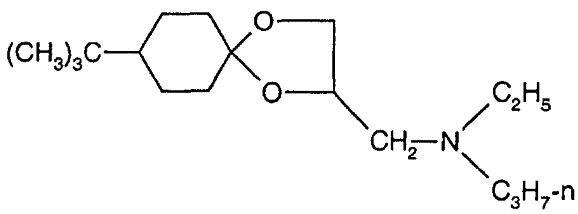

(XI)

(spiroxamine)

and/or

(11) the compound of the formula

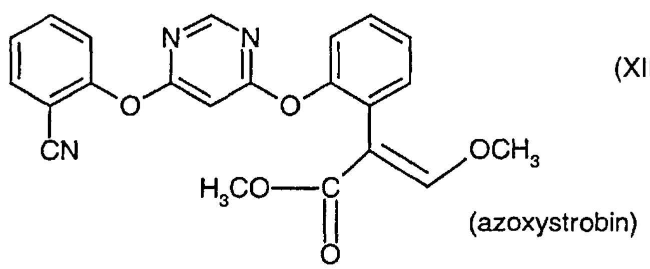

(XII)

(azoxystrobin)

and/or

(12) the compound of the formula

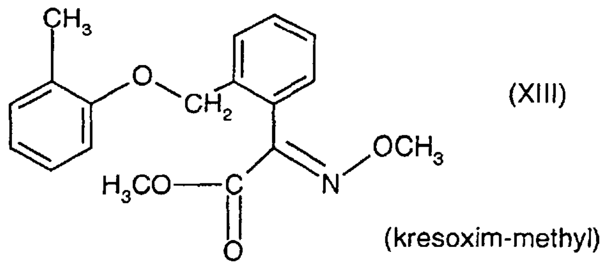

(XIII)

(kresoxim-methyl)

and/or

(13)the compound of the formula

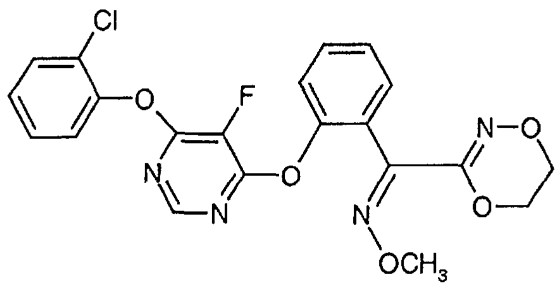

(XIV)

and/or

(14)the dicarboximide of the formula

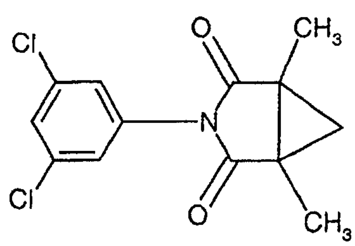

(XV)

(procymidone)

and/or

(15)a pyrimidine derivative of the formula

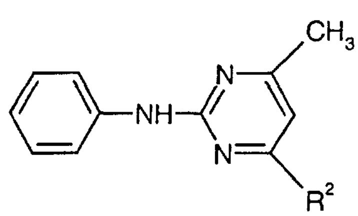

(XVI)

in which

$R^2$ represents methyl or cyclopropyl,

and/or

(16)the phenyl derivative of the formula

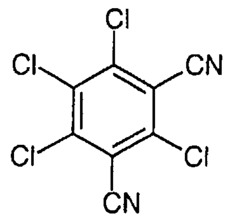

(XVII)

(chlorothalonil)

and/or

(17) the morpholine derivative of the formula

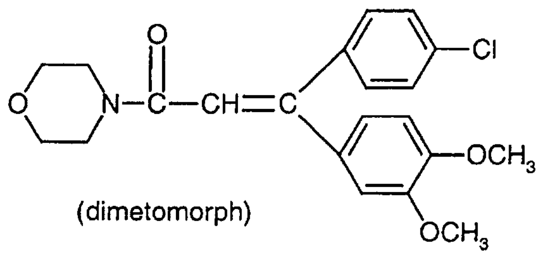

(XVIII)

(dimetomorph)

and/or

(18) the phthalimide derivative of the formula

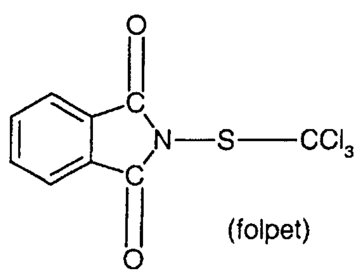

(XIX)

(folpet)

and/or

(19)the phosphorus compound of the formula

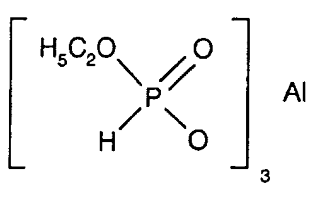

(XX)

(fosetyl-Al)

and/or

(20) a phenylpyrrole derivative of the formula

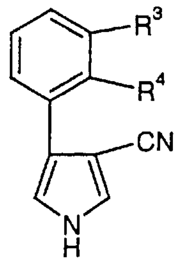

(XXI)

in which

$R^3$ and $R^4$ each represent chlorine or together represent a radical of the formula $-O-CF_2-O-$,

and/or

(21) the 1-[(6-chloro-3-pyridinyl)-methyl]-N-nitro-2-imidazolidineimine of the formula

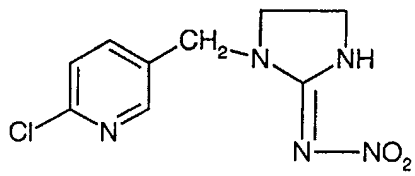

(XXII)

(imidacloprid)

and/or

(22) the phenylurea derivative of the formula

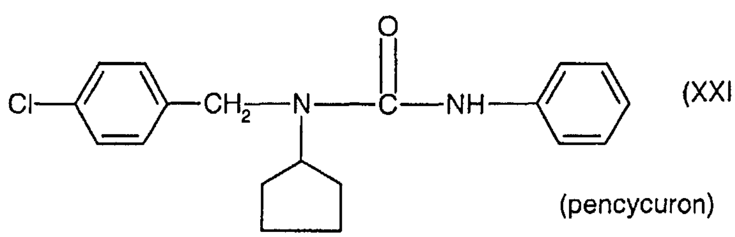

(XXIII)

(pencycuron)

and/or

(23) the benzamide derivative of the formula

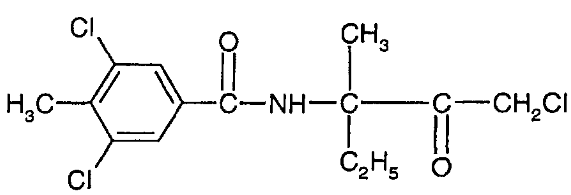

(XXIV)

and/or

(24)a guanidine derivative of the formula

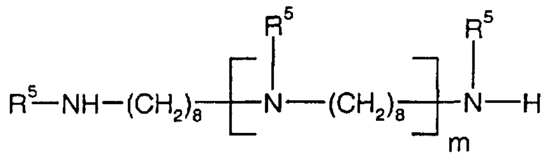 (XXV)

x (2 + m) $CH_3COOH$

in which

m represents integers from 0 to 5
and
$R^5$ represents hydrogen (17 to 23 %) or the radical of the formula

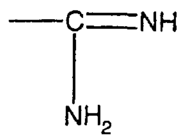 (77 to 83 %)

,

where in the active compound combinations the weight ratio of active compound of the formula (I) to

- active compound of group (1) is between 1:0.1 and 1:20,
- active compound of group (2) is between 1:0.1 and 1:20,
- active compound of group (3) is between 1:0.2 and 1:150,
- active compound of group (4) is between 1:0.1 and 1:10,
- active compound of group (5) is between 1:1 and 1:50,
- active compound of group (6) is between 1:1 and 1:50,
- active compound of group (7) is between 1:0.1 and 1:50,
- active compound of group (8) is between 1:0.2 and 1:50,
- active compound of group (9) is between 1:0.02 and 1:50,
- active compound of group (10) is between 1:0.1 and 1:50,
- active compound of group (11) is between 1:0.1 and 1:50,
- active compound of group (12) is between 1:0.1 and 1:50,
- active compound of group (13) is between 1:0.1 and 1:50,
- active compound of group (14) is between 1:0.1 and 1:50,
- active compound of group (15) is between 1:0.1 and 1:50,
- active compound of group (16) is between 1:1 and 1:50,
- active compound of group (17) is between 1:1 and 1:20,
- active compound of group (18) is between 1:1 and 1:50,
- active compound of group (19) is between 1:1 and 1:50,
- active compound of group (20) is between 1:0.1 and 1:10,
- active compound of group (21) is between 1:0.05 and 1:20,
- active compound of group (22) is between 1:0.1 and 1:10,
- active compound of group (23) is between 1:0.1 and 1:10 and
- active compound of group (24) is between 1:0.1 and 1:10.

2. Method for controlling fungi, **characterized in that** active compound combinations according to Claim 1 are applied to the fungi and/or their habitat.

3. Use of active compound combinations according to Claim 1 for controlling fungi.

4. Process for preparing fungicidal compositions, **characterized in that** active compound combinations according to Claim 1 are mixed with extenders and/or surfactants.

## Revendications

**1.** Compositions fongicides, **caractérisées par** une teneur en une association de substances actives, consistant en la 2-[2-(1-chlorocyclopropyl)-3-(2-chlorophényl)-2-hydroxypropyl]-2,4-dihydro-[1,2,4]-triazole-3-thione de formule

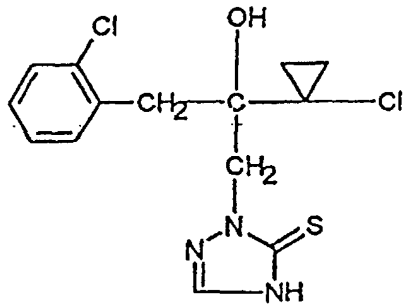

(I)

et

(1) un dérivé triazolique de formule

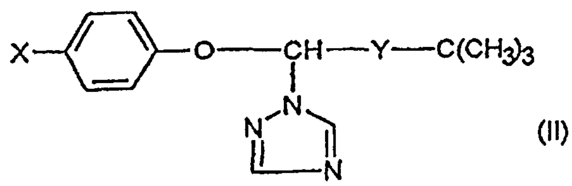

(II),

dans laquelle

X représente le chlore ou le groupe phényle et
Y représente

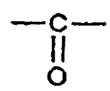

ou

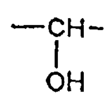

et/ou
(2) le dérivé triazolique de formule

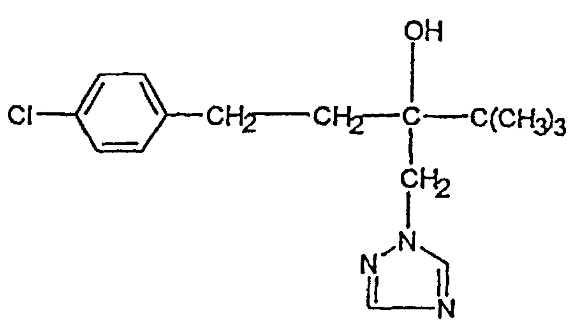

(III)

(tébuconazole)

et/ou

(3) un dérivé d'aniline de formule

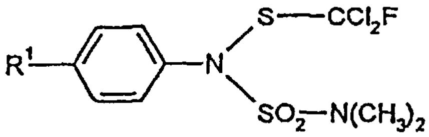

(IV)

dans laquelle

$R^1$ représente l'hydrogène ou le groupe méthyle, et/ou

(4) le N-[1-(4-chlorophényl)-éthyl]-2,2-dichloro-1-éthyl-3-méthylcyclopropane-carboxamide de formule

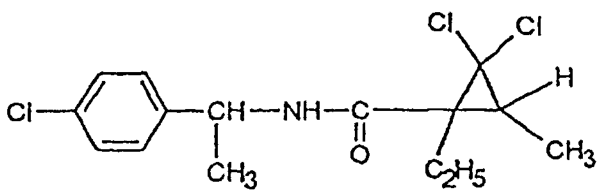

(V)

et/ou
(5) le propylène-1,2-bis-(dithiocarbamidate) de zinc de formule

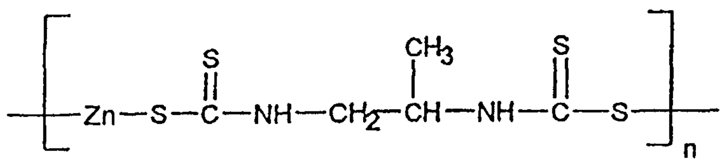

(VI)

(propinèbe)

n >= 1

et/ou
(6) au moins un thiocarbamate de formule

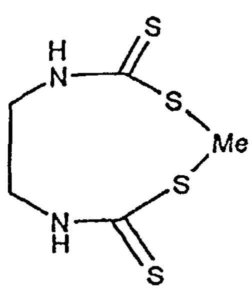

(VII)

Me= Zn ou Mn
ou un mélange de Zn et Mn

et/ou
(7) le dérivé d'aniline de formule

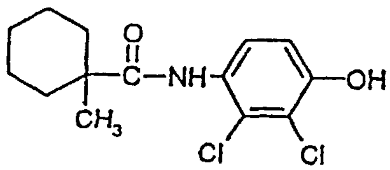

(VIII)

(fenhexamide)

et/ou

(8) le composé de formule

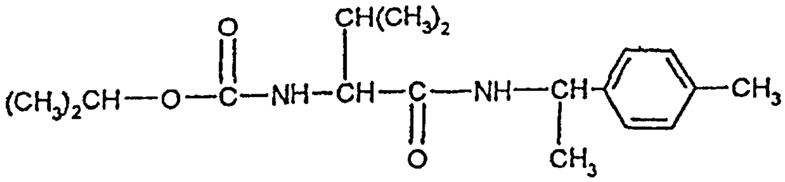

(IX)

et/ou

(9) le dérivé de benzothiadiazole de formule

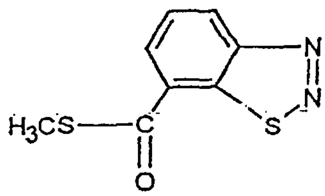

(bendicar)

et/ou

(10) le 8-tertio-butyl-2-(N-éthyl-N-n-propylamino)-méthyl-1,4-dioxaspiro-[5,4]-décane de formule

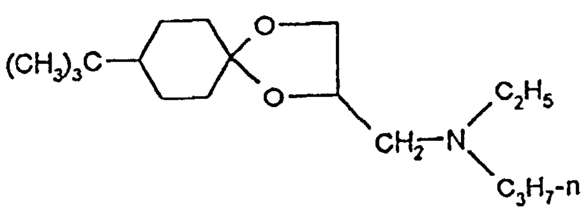

(XI)

(spiroxamine)

et/ou

(11) le composé de formule

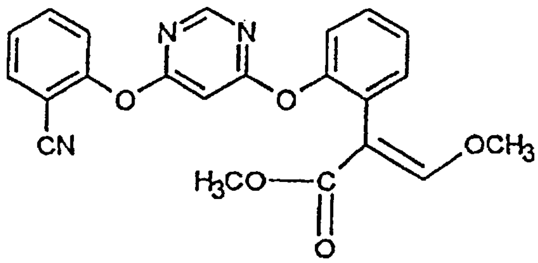

(XII)

(azoxystrobine)

et/ou

(12) le composé de formule

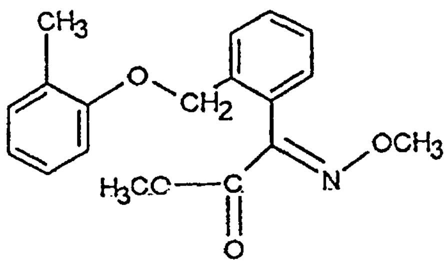

(XIII)

(krésoxim-méthyl)

et/ou

(13) le composé de formule

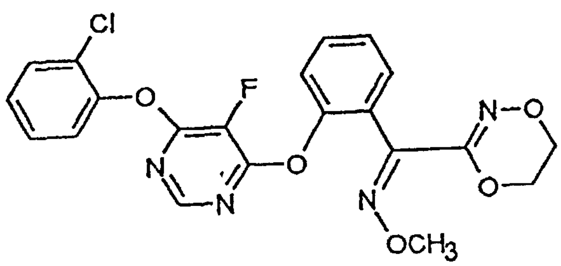

(XIV)

et/ou

(14) le dicarboximide de formule

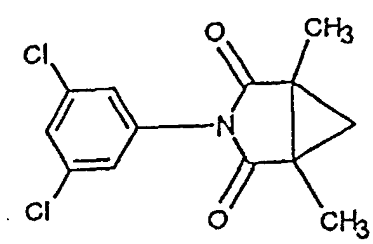

(XV)

(procymidone)

et/ou

(15) un dérivé de pyrimidine de formule

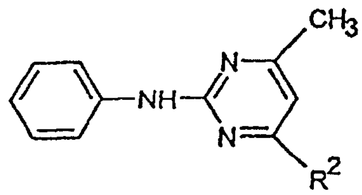

(XVI)

dans laquelle

$R^2$ représente le groupe méthyle ou cyclopropyle,

et/ou
(16) le dérivé phénylique de formule

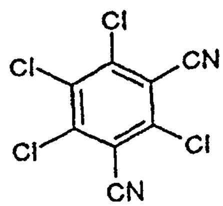

(XVII)

(chlorothalonil)

et/ou
(17) le dérivé de morpholine de formule

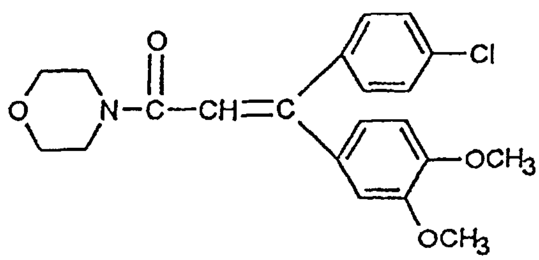

(XVIII)

(dimétomorphe)

et/ou
(18) le dérivé de phtalimide de formule

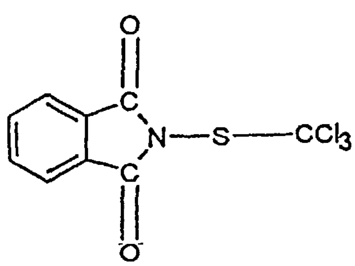

(XIX)

(folpet)

et/ou
(19) le composé de phosphore de formule

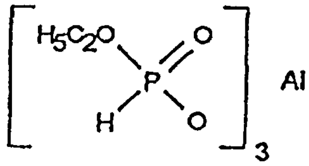

(XX)

(fosétyl-Al)

et/ou
(20) un dérivé phénylpyrrolique de formule

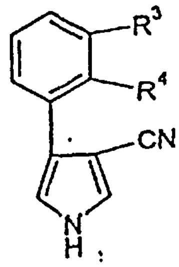

(XXI)

dans laquelle

$R^3$ et $R^4$ représentent chacun le chlore ou forment ensemble un reste de formule $-O-CF_2-O-$,

et/ou
(21) la 1-[(6-chloro-3-pyridinyl)-méthyl]-N-nitro-2-imidazolidinimine de formule

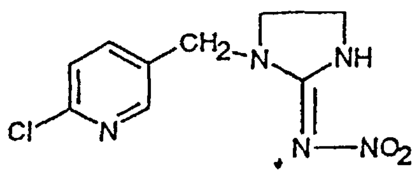

(XXII)

(imidaclopride)

et/ou
(22) le dérivé de phénylurée de formule

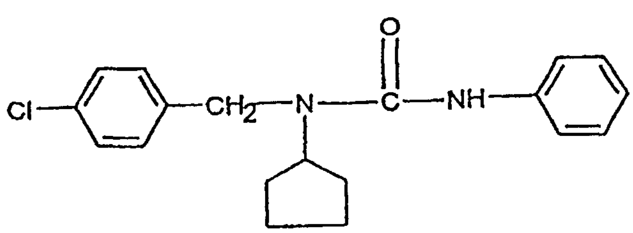

(XXIII)

(pencycuron)

et/ou
(23) le dérivé de benzamide de formule

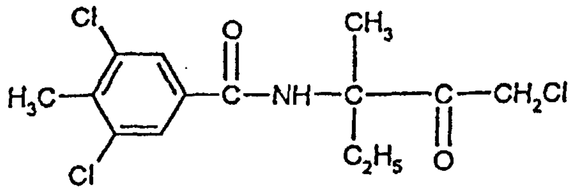 (XXIV)

et/ou

(24) un dérivé de guanidine de formule

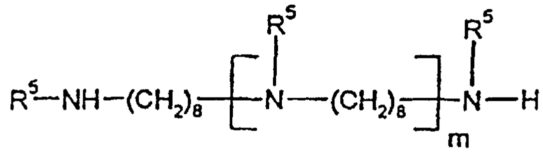 (XXV)

$$x\,(2 + m)\ CH_3COOH$$

dans laquelle

m représente des nombres entiers de 0 à 5

et

$R^5$ représente l'hydrogène (17 à 23 %) ou le reste de formule

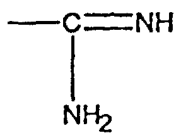 (77 à 83 %)

les associations de substances actives contenant la substance active de formule (I) dans un rapport en poids

- avec la substance active du groupe (1), compris entre 1:0,1 et 1:20,
- avec la substance active du groupe (2), compris entre 1:0,1 et 1:20,
- avec la substance active du groupe (3), compris entre 1:0,2 et 1:150,
- avec la substance active du groupe (4), compris entre 1:0,1 et 1:10,
- avec la substance active du groupe (5), compris entre 1:1 et 1:50,
- avec la substance active du groupe (6), compris entre 1:1 et 1:50,
- avec la substance active du groupe (7), compris entre 1:0,1 et 1:50,
- avec la substance active du groupe (8), compris entre 1:0,2 et 1:50,
- avec la substance active du groupe (9), compris entre 1:0,02 et 1:50,
- avec la substance active du groupe (10), compris entre 1:0,1 et 1:50,
- avec la substance active du groupe (11), compris entre 1:0,1 et 1:50,
- avec la substance active du groupe (12), compris entre 1:0,1 et 1:50,
- avec la substance active du groupe (13), compris entre 1:0,1 et 1:50,
- avec la substance active du groupe (14), compris entre 1:0,1 et 1:50,
- avec la substance active du groupe (15), compris entre 1:0,1 et 1:50,
- avec la substance active du groupe (16), compris entre 1:1 et 1:50,
- avec la substance active du groupe (17), compris entre 1:1 et 1:20,
- avec la substance active du groupe (18), compris entre 1:1 et 1:50,
- avec la substance active du groupe (19), compris entre 1:1 et 1:50,
- avec la substance active du groupe (20), compris entre 1:0,1 et 1:10,
- avec la substance active du groupe (21), compris entre 1:0,05 et 1:20,
- avec la substance active du groupe (22), compris entre 1:0,1 et 1:10,
- avec la substance active du groupe (23), compris entre 1:0,1 et 1:10, et

- avec la substance active du groupe (24), compris entre 1:0,1 et 1:10.

2. Procédé pour combattre des champignons, **caractérisé en ce qu'**on épand des associations de substances actives suivant la revendication 1 sur les champignons et/ou sur leur milieu.

3. Utilisation d'associations de substances actives suivant la revendication 1 pour combattre des champignons.

4. Procédé de préparation de compositions fongicides, **caractérisé en ce qu'**on mélange des associations de substances actives suivant la revendication 1 avec des diluants et/ou des agents tensio-actifs.